(19) Europäisches Patentamt
European Patent Office
Office européen des brevets

(11) Veröffentlichungsnummer: **0 144 776**
**B1**

(12) # EUROPÄISCHE PATENTSCHRIFT

(45) Veröffentlichungstag der Patentschrift: **11.10.89**

(51) Int. Cl.$^4$: **C 09 B 62/012**, C 09 B 62/002, D 06 P 3/10

(21) Anmeldenummer: **84113415.8**

(22) Anmeldetag: **07.11.84**

(54) **Faserreaktive Chromkomplexe, deren Herstellung und Verwendung.**

(30) Priorität: **10.11.83 CH 6068/83**

(43) Veröffentlichungstag der Anmeldung: **19.06.85 Patentblatt 85/25**

(45) Bekanntmachung des Hinweises auf die Patenterteilung: **11.10.89 Patentblatt 89/41**

(84) Benannte Vertragsstaaten: **BE CH DE FR GB IT LI**

(56) Entgegenhaltungen:
**DE-C- 933 622**
**FR-A- 1 310 178**
**FR-A- 2 225 486**
**FR-A- 2 333 029**
**GB-A- 793 903**
**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Schütz, Hans Ulrich**
**Hans Huber Strasse 23**
**CH-4053 Basel (CH)**
Erfinder: **Schlesinger, Ulrich, Dr.**
**Hermann Sautter 5**
**D-7851 Binzen (DE)**
Erfinder: **Back, Gerhard, Dr.**
**Hammerstrasse 5**
**D-7850 Lörrach (DE)**

(74) Vertreter: **Zumstein, Fritz jun., Dr. et al**
**Dr. F. Zumstein sen. Dr. E. Assmann Dr. R. Koenigsberger Dipl.-Ing. F. Klingseisen Dr. F. Zumstein jun.**
**Bräuhausstrasse 4**
**D-8000 München 2 (DE)**

EP 0 144 776 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Metallkomplexfarbstoffe sind seit langem bekannt und werden in grossem Umfang für das Färben und Bedrucken von Textilien aus Fasermaterialien in den verschiedensten Nuancen eingesetzt. Angesichts der immer höheren Anforderungen an diese Farbstoffe z. B. in bezug auf die Egalität der Ausfärbungen und das Echtheitsniveau ist der erreichte technische Stand vielfach nicht voll befriedigend. So genügen viele der bekannten 1 : 2-Metallkomplexazo- oder -azomethinfarbstoffe in bezug auf die Egalität der Ausfärbungen wegen mangelndem Diffusionsvermögen der Farbstoffe in der Faser nicht den heutigen Anforderungen ; die meisten der bekannten 1 : 1-Metallkomplexazo- oder -azomethinfarbstoffe haben den Nachteil, dass sie bei einem stark sauren pH-Wert gefärbt werden müssen, bei dem einige Fasermaterialien geschädigt werden können.

Die der vorliegenden Erfindung zugrunde liegende Aufgabe war es, neue Metallkomplexazo- oder -azomethinfarbstoffe zu finden, die bei leichter Zugänglichkeit und einfacher Applikationstechnik egale Ausfärbungen bei gleichzeitig guten Allgemeinechtheiten, insbesondere Nassechtheiten, ergeben, die den heutigen Anforderungen genügen. Es hat sich gezeigt, dass die weiter unten definierten neuen Chromkomplexfarbstoffe diesen Anforderungen genügen.

Gegenstand der vorliegenden Erfindung sind Chromkomplexfarbstoffe der Formel

$$\left[\begin{array}{c} A \\ ||| \\ Cr \\ ||| \\ (L + B) \end{array}\right]\begin{array}{l} -(SO_3^{\ominus}Ka)_m \\ \\ -(X)_n \end{array} \qquad (1)$$

worin A der Rest eines dicyclisch metallisierbaren Azo- oder Azomethinfarbstoffes, B der Rest einer monoanionischen, zweizähnigen, komplexbildenden, organischen Verbindung, der über ein Stickstoffatom mit dem Chromatom verbunden ist, L ein farbloser monofunktioneller Ligand, X ein faserreaktiver Rest der aliphatischen Reihe, der Mono- oder Difluor-s-triazinylreihe oder der Mono-, Di- oder Trihalogenpyrimidylreihe, Ka ein Kation, m = 1, 2 oder 3 und n = 1 oder 2 ist, wobei der Rest X und die Gruppe $SO_3^{\ominus}Ka$ an den Rest A und/oder B gebunden ist.

Die erfindungsgemässen Chromkomplexe der Formel (1) sind neutral. Der Rest B ist als monoanionische, zweizähnige, komplexbildende, organische Verbindung mit einer kovalenten und einer koordinativen Bindung an dem Chromkomplex beteiligt. Da die Chromkomplexe der Formel (1) ihre maximale Koordinationszahl 6 betätigen, enthalten die Komplexe noch einen monofunktionellen Liganden L, bei dem sich freie Elektronenpaare der Donatoratome an der Bindung beteiligen.

Der Azo- oder Azomethinfarbstoffrest A in Formel (1) kann ausser den komplexbildenden Gruppen die üblichen in Farbstoffen vorkommenden Substituenten enthalten, wie z. B. Alkylgruppen mit 1 bis 5 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Mono- oder Dialkylamino mit je 1 bis 4 Kohlenstoffatomen im Alkylrest, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, $C_{1-4}$-Alkylsulfonyl, wie z. B. Methylsulfonyl, Carboxy, Sulfomethyl und Sulfo sowie einen bis zwei faseraktive Reste X und Arylazogruppen, wie z. B. die Phenylazo- und Naphthylazogruppe.

Als Azo- oder Azomethinfarbstoffrest A kommt insbesondere der Rest der Formel

$$\left[\begin{array}{c} Z_1 \qquad\qquad\quad Z_2 \\ | \qquad\qquad\qquad | \\ D - N = Y - K \end{array}\right]\begin{array}{l} -(SO_3^{\ominus}Ka)_p \\ -(X)_q \end{array} \qquad (2)$$

in Betracht, worin D der Rest einer Diazokomponente der Benzol- oder Naphthalinreihe, Y ein Stickstoffatom oder die CH-Gruppe, K für den Fall, dass Y ein Stickstoffatom ist, der Rest einer Kupplungskomponente, insbesondere der Benzol- oder Naphthalinreihe oder der heterocyclischen Reihe, oder, für den Fall, dass Y die CH-Gruppe ist, der Rest eines o-Hydroxybenzaldehyds oder eines o-Hydroxynaphthaldehyds, $Z_1$ in o-Stellung zu dem Rest —N=Y— die —O— oder —COO-Gruppe und $Z_2$ die —O— oder —N(R)-Gruppe ist, wobei R Wasserstoff, gegebenenfalls substituiertes $C_{1-4}$-Alkyl, wie z. B. Methyl, Aethyl, β-Hydroxyäthyl, Isopropyl, n-Propyl, sek.-Butyl, Isobutyl, tert. Butyl und n-Butyl, oder gegebenenfalls substituiertes Phenyl bedeutet, und $Z_2$ in Nachbarstellung zu dem Rest —N=Y— an K gebunden ist, Ka und X die unter Formel (1) angegebenen Bedeutungen haben, p = 0, 1, 2 oder 3 und q = 0, 1 oder 2 ist, wobei, falls p = 0 ist, der Rest B mindestens eine $(SO_3^{\ominus}Ka)$-Gruppe und, falls q = 0 ist, mindestens einen faserreaktiven Rest X enthält.

Aus der grossen Zahl möglicher, monoanionischer, zweizähniger, komplexbildender, organischer Verbindungen sind solche bevorzugt, die mit dem Chrom einen 5- oder 6-Ring bilden.

Insbesondere bevorzugt sind diejenigen Verbindungen, worin B eine monoanionische, zweizähnige, komplexbildende, organische Verbindung der Benzol-, Naphthalin- oder Heterocyclenreihe oder der aliphatischen Reihe ist, die 1 bis 2 Sulfonsäuregruppen und einen faserreaktiven Rest X enthalten kann, und wobei der Rest B über ein koordinativ gebundenes Stickstoffatom an das Chromatom gebunden ist.

Insbesondere ist B ein Rest der 8-Hydroxy- oder 8-Carboxychinolin-, Pyridin-2-carbonsäure-, o-Hydroxyanilin- oder o-Hydroxynaphthylaminreihe, oder ein Rest der Formel

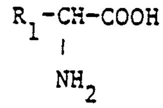

wobei $R_1$ $C_{1-6}$-Alkyl, wie Methyl, Aethyl, Isopropyl, Propyl, sek.-Butyl, Isobutyl, tert.-Butyl, n-Butyl, Pentyl und Hexyl ist, wobei der Rest $R_1$ gegebenenfalls weitersubstituiert ist, z. B. durch Halogen, wie Fluor, Chlor oder Brom, $C_{1-4}$-Alkoxy, wie Methoxy oder Aethoxy oder Aminogruppen wie z. B. $—NH_2$.

Ganz besonders bevorzugt sind Verbindungen, worin B den Rest von 8-Hydroxychinolin und Pyridin-2-carbonsäure bedeutet.

Der monofunktionelle Ligand L in Formel (1) bedeutet vorwiegend $H_2O$, $NH_3$, $R_2—OH$, $R_2—NH_2$, $(R_2)_2NH$, $(R_2)_3N$ oder Pyridin, wobei $R_2$ die oben unter $R_1$ angegebene Bedeutung hat.

Das Symbol X bezeichnet einen faserreaktiven Rest der aliphatischen Reihe, der Mono- oder Difluor-s-triazinylreihe oder der Mono-, Di- oder Trihalogenpyrimidylreihe, der direkt oder über ein Brückenglied an den Azo- oder Azomethinfarbstoffrest A und/oder an den Rest B gebunden ist.

Vorzugsweise ist X über eine gegebenenfalls monoalkylierte Aminogruppe wie z. B. —NH—, $—N(CH_3)—$, $—N(C_2H_5)—$ oder $—N(C_3H_7)—$ oder über ein, eine Aminogruppe enthaltendes Brückenglied an den Rest A und/oder B gebunden.

Im einzelnen ist beispielsweise der 2-Methoxy-4-fluortriazinyl-6-Rest zu nennen.

Besonders interessante faserreaktive Reste sind Fluor-1,3,5-triazinreste der Formel

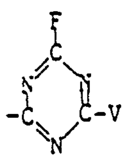

wobei als Substituenten V am Triazinring insbesondere zu nennen sind : Reste von primären, sekundären und tertiären Aminen, wie $—NH_2$, $—NHC_2H_5$, $—N(C_2H_5)_2$, $—NH—CH(CH_3)_2$, $—NHC_2H_4OH$, $—N(C_2H_4OH)_2$, Morpholino, Piperidino, N-Phenylamino, N-(2-, 3- oder 4-Sulfophenyl)-amino, N-Toluidino, N-(2,4- oder 2,5-Disulfophenyl)-amino und N-(γ-Methoxypropyl)-amino, $C_{1-4}$-Alkoxyrest, wie Methoxy, Aethoxy, Isopropoxy, Propoxy und Phenoxy.

Von Interesse sind ferner Reaktivreste, die der folgenden Formel entsprechen :

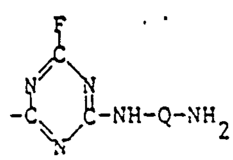

worin Q ein aliphatisches oder aromatisches Brückenglied darstellt. Derartige Reste können mit 2,4,6-Trifluor-1,3,5-triazin zu einem Rest der Formel

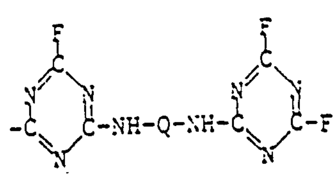

weitersubstituiert sein und dieser schliesslich mit einem Amin zur Reaktion gebracht werden. Geeignete derartige Amin sind z. B. Ammoniak, Methylamin, Aethylamin, Dimethylamin, Diäthylamin, Aethanolamin, Diäthanolamin, Morpholin, Piperidin, 2-, 3- oder 4-Aminotoluol, Metanilsäure, Sulfanilsäure, Anilin, N-Methylanilin, 4-Aminobenzylsulfonsäure, 2-, 3- oder 4-Aminobenzoesäure, Naphthylaminomono-, -di- und -trisulfonsäuren sowie auch aminogruppenhaltige Farbstoffe.

Geeignete Diamine, die den Rest der Formel $—NH—Q—NH_2$ einführen, sind z. B. : Aethylendiamin,

1,3-Diaminopropan, 1,6-Diaminohexan, 1,3- und 1,4-Phenylendiamin, 1,3-Phenylendiamin-4-sulfonsäure, 1,4-Phenylendiamin-2-sulfonsäure, 2,4-Diaminotoluol, 4,4'-Diaminodiphenyl-2,2'-disulfonsäure, 4,4'-Diamino-diphenylharnstoff-2,2'-disulfonsäure, 2,5-Diaminonaphthalin-4,8-disulfonsäure, 4,4'-Diaminodiphenyläther und 2,5-Diaminobenzoesäure.

Des weiteren sind von Interesse Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder trichlormethyl- oder 5-carbalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl- sowie die entsprechenden Brom- und Fluor-Derivate der oben erwähnten chlorsubstituierten Pyrimidyle, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-chlor-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl ; sulfonylgruppenhaltige Pyrimidinringe, wie 2-Phenylsulfonyl-5-chlor-6-methylpyrimidinyl-4-, 2,6-Bis-methylsulfonyl-5-chlor-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-chlor-6-chlor-methyl-pyrimidinyl-4-, 2-Methylsulfonyl-4-chlor-6-methyl-pyrimidin-5-sulfonyl-, 2-Aethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-5-chlor-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidinyl-4- und -5-carbonyl-, 2-Aethylsulfonyl-6-chlorpyrimidin-5-carbonyl-, 2-Methylsulfonyl-4-chlor-6-methylpyrimidin-5-sulfonyl- oder -carbonyl.

Des weiteren sind Reaktivgruppen der aliphatischen Reihe zu nennen wie Mono-, Di- oder Trichloracryloylreste oder Mono- oder Dibromacryloylreste, z. B. α,β-Dibrompropionyl, $-CO-CH=CH-Cl$, $-COCCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonyl-propionyl-, β-Sulfato-äthylaminosulfonyl-, Vinylsulfonyl-, β-Chloräthylsulfonyl-, β-Sulfatoäthylsulfonyl-, β-Methylsulfonyl-äthylsulfonyl-, β-Phenylsulfonyläthylsulfonyl-, 2-Fluor-2-chlor-3,3-difluorcyclobutan-1-carbonyl-, 2,2,3,3-Tetrafluorcyclobutancarbonyl-1- oder -sulfonyl-1-, β-(2,2,3,3-Tetrafluorcyclobutyl-1)-acryloyl-, α- oder β-Bromacryloyl-, die α- oder β-Alkyl- oder -Arylsulfonyl-acryloyl-Gruppe, wie α- oder β-Methylsulfonylacryloyl.

Das Kation Ka in Formel (1) bedeutet ein Wasserstoff-, Natrium-, Kalium-, Lithium- oder Ammonium-Ion oder das Kation eines organischen Amins wie z. B. des Triäthanolamins.

Besonders bevorzugt sind die Chromkomplexe der Formel

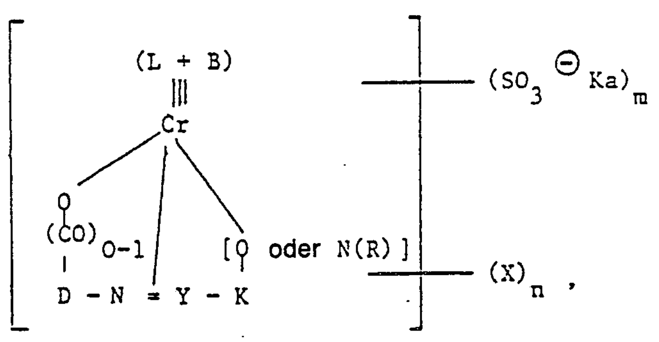

(3)

worin B der Rest einer monoanionischen, zweizähnigen, komplexbildenden, organischen Verbindung der Benzol-, Naphthalin- oder Heterocyclenreihe oder der aliphatischen Reihe ist, L ein farbloser, monofunktioneller Ligand, D der Rest einer Diazokomponente der Benzol- oder Naphthalinreihe, der die $-(CO)_{0-1}O$-Gruppe in o-Stellung zur $-N=Y$-Gruppe enthält, Y ein Stickstoffatom oder die $-CH$-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Acetoacetarylid- oder Benzoylessigsäurearylidreihe ist, die den Rest —[O oder N(R)]— in Nachbarstellung zur Azobrücke enthält und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxynaphthaldehyds bedeutet und X einen faserreaktiven Rest der aliphatischen Reihe, der Mono- oder Difluor-s-triazinylreihe oder der Mono-, Di- oder Trihalogenpyrimidylreihe, der direkt oder über ein Brückenglied an D und/oder K und/oder B gebungebunden ist, Ka ein Kation, m = 1, 2 oder 3 und n = 1 oder 2 bedeutet, wobei die Gruppe $SO_3^{\ominus}$Ka an D und/oder K gebunden ist.

Insbesondere bedeutet Y ein Stickstoffatom.

Insbesondere ist X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Sulfatoäthylsulfonylrest oder ein Rest der Mono-, Di- oder Trihalogenpyrimidyl- oder Mono- oder Difluor-s-triazinylreihe, wobei X gegebenenfalls über ein Brückenglied der Formel

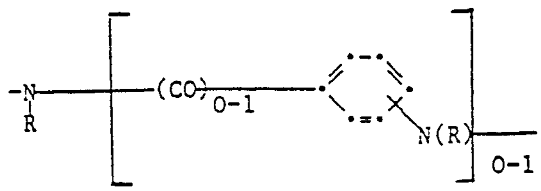

oder

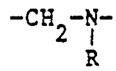

an D und/oder K und/oder B gebunden ist und R die unter Formel (3) angegebene Bedeutung hat und wobei die Chromkomplexe einen oder zwei Reste X enthalten. Vor allem ist X der α,β-Dibrompropionyl- oder α-Bromacryloylrest.

Ganz besonders bevorzugt sind die Chromkomplexe der Formel

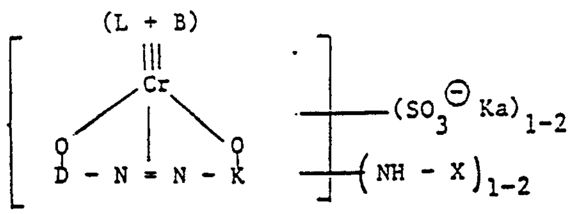

(4)

worin B den Rest von 8-Hydroxychinolin, 5-Chlor-8-hydroxychinolin, 8-Hydroxychinolin-7-sulfonsäure, 5,7-Dibrom-8-hydroxychinolin, gegebenenfalls durch den Rest —NH—X substituierte 8-Hydroxychinolin-5-sulfonsäure, Pyridin-2-carbonsäure, Alanin, Serin, Glycin, Lysin, Asparaginsäure, Prolin, L als farbloser, monofunktioneller Ligand Wasser, D ein Benzolrest, der das Sauerstoffatom in o-Stellung zur Azobrücke enthält und durch Sulfo, Nitro, Chlor und den Rest —NH—X substituiert sein kann oder ein Naphthalinrest, der das Sauerstoffatom in o-Stellung zu der Azobrücke enthält und der substituiert sein kann durch Sulfo, Nitro und den Rest —NH—X, K ein Naphthalinrest, der durch den Rest —NH—X und 1 oder 2 Sulfonsäuregruppen substituiert sein kann, wobei der Rest —NH—X direkt oder über den Phenylaminorest an den Naphthalinkern gebunden ist, ein 1-Phenyl-3-methylpyrazolon-(5)-rest, wobei die Gruppe —NH—X an den Phenylring gebunden sein kann, oder ein 1-(2′,2″-Disulfostilben)-3-methylpyrazolon-(5)-rest, wobei die Gruppe —NH—X in 4″-Stellung gebunden ist, oder ein Phenylrest ist, der durch $C_{1-4}$-Alkyl substituiert sein kann und X α,β-Dibrompropionyl, α-Bromacryloyl, β-Chloracryloyl, 2,6-Difluor-5-chlorpyrimidyl, 2-Fluor-4-(3′-sulfophenylamino)-triazinyl, 2-Fluor-4-(2′-methylphenylamino)-triazinyl, 2-Fluor-4-isopropylaminotriazinyl, 2-Fluor-5-chlor-6-chlormethylpyrimidinyl oder 2-Fluor-5-chlor-6-methylpyrimidinyl ist und Ka ein Alkalikation, insbesondere $Na^{\oplus}$, bedeutet.

Besonders bevorzugt sind ferner die Chromkomplexe der Formel

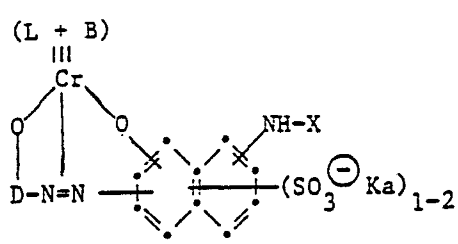

(5)

worin B, D, L und Ka die unter Formel (4) angegebenen Bedeutungen haben, die Azogruppe an den Naphthalinkern in o-Stellung an den Rest —O— gebunden ist, X α,β-Dibrompropionyl oder α-Bromacryloyl bedeutet und der Chromkomplex nicht mehr als 1 oder 2 Sulfogruppen enthält.

Gegenstand der Erfindung ist ferner ein Verfahren zur Herstellung der Chromkomplexe der Formel (1), welches dadurch gekennzeichnet ist, dass man eine zweizähnige, komplexbildende, organische Verbindung, die den monoanionischen Rest B enthält, mit einem 1 : 1-Chromkomplex der Formel

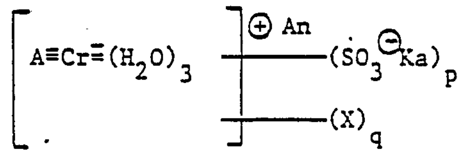

(6)

worin A, X und Ka die unter Formel (1) angegebenen Bedeutungen haben, und p = 0, 1, 2 oder 3, q = 0, 1 oder 2 und An ein Anion ist, in wässrigem Medium, gegebenenfalls in Gegenwart eines von Wasser verschiedenen, farblosen monofunktionellen Liganden L, umsetzt und gegebenenfalls anschliessend den erhaltenen Chromkomplex mit einer den/die faserreaktiven Rest(e) X einführenden Verbindung(en) umsetzt, wobei falls p = 0 ist, der Rest B mindestens eine Sulfogruppe enthält.

Vorzugsweise wird die zweizähnige, komplexbildende, organische Verbindung mit dem 1 : 1-Chromkomplex der Formel (6) bei einer Temperatur von 60 bis 100 °C und einem pH von 5 bis 11 umgesetzt.

Die Umsetzung mit einer die Reaktivgruppe(n) einführenden Verbindung erfolgt insbesondere bei einer Temperatur von 15 bis 30 °C und einem pH von 5 bis 8.

In der Literatur sind viele metallisierbare Azo- und Azomethinfarbstoffe beschrieben, die den Rest A liefern können, wie z. B. o,o'-Di-hydroxy-, o-Carboxy-o'-hydroxy-, o-Hydroxy-o'-aminoazo- oder Azomethinverbindungen, die insbesondere der Formel

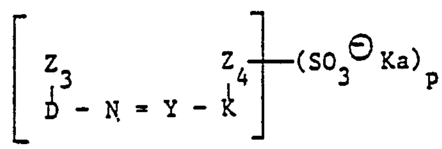

(7)

entsprechen, worin $Z_3$ die Hydroxy-, Carboxy- oder Methoxygruppe, $Z_4$ die Hydroxy- oder HN(R)-Gruppe ist und D, K, Y, Ka und R und p die unter Formel (2) angegebenen Bedeutungen haben, und D und/oder K gegebenenfalls funktionelle Gruppen enthalten, welche zur Bindung der faserreaktiven Gruppe(n) X geeignet sind, wie z. B. Aminogruppen oder in Aminogruppen überführbare Gruppen wie z. B. die Acetylamino- oder die Nitrogruppe. Die Verbindungen der Formel (7), worin Y ein Stickstoffatom ist, werden in an sich bekannter Weise hergestellt, indem man ein Amin der Formel

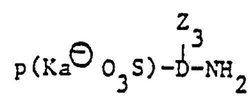

(8)

diazotiert und auf eine Kupplungskomponente der Formel

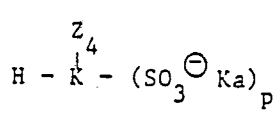

(9)

kuppelt, wobei D, K, $Z_3$, $Z_4$, Ka und p die unter Formel (7) angegebenen Bedeutungen haben.

Die Diazotierung der Diazokomponente der Formel (8) erfolgt in der Regel durch Einwirkung salpetriger Säure in wässrig-mineralsaurer Lösung bei tiefer Temperatur, die Kupplung auf die Kupplungskomponente der Formel (9) bei sauren, neutralen bis alkalischen pH-Werten.

Als Amine der Formel (8) kommen z. B. in Betracht: 2-Amino-1-hydroxybenzol, 2-Amino-1-methoxybenzol, Anthranilsäure, 4- oder 5-Sulfonamido-anthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetyl-amino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, -chlormethyl- und butylsulfon, 6-Chlor-, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-methoxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5- oder -6-sulfonsäureamid, 4- oder 5-Chloranisidin, 4- oder 5-Nitroanisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-Chlor-4-sulfo-2-amino-1-hydroxybenzol, 4-Chlor-5-nitro-2-amino-1-hydroxybenzol, 5-Nitro-4-sulfo-2-amino-1-hydroxybenzol, 4-Nitro-6-sulfo-2-amino-1-hydroxybenzol, 6-Nitro-4-sulfo-2-amino-1-hydroxybenzol, 4-Acetylamino-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2′-carboxyphenyl) sulfamid, 1-Amino-2-hydroxy-4-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin, 1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin, 2-Amino-1-hydroxy-4,8-disulfonaphthalin.

Die Kupplungskomponenten der Formel (9) können sich z. B. von folgenden Gruppen von Kupplungskomponenten ableiten :

In o-Stellung zur OH-Gruppe kuppelnde Naphthole, die gegebenenfalls mit Halogen, insbesondere Chlor, Amino, Acylamino, Acyl, $C_{1-4}$-Alkyl, $C_{1-4}$-Alkoxy, Sulfonamido-, N-mono- oder N,N-disubstituierten Sulfonamidogruppen, Sulfo- und Sulfongruppen substituiert sind.

In o-Stellung zur Aminogruppe kuppelnde Naphthylamine, die gegebenenfalls mit Halogen, insbesondere Brom, $C_{1-4}$-Alkyl, $C_{1-4}$-Alkoxy, Sulfonamido-, mono- oder disubstituierten Sulfonamido-, Sulfo- oder Sulfongruppen substituiert sind.

5-Pyrazolone und 5-Aminopyrazole, die in 1-Stellung einen gegebenenfalls mit Halogen, insbesondere Chlor, Nitro, $C_{1-4}$-Alkyl- und Alkoxygruppen, Sulfonamido-, N-alkylierten Sulfonamidogruppen, Sulfo oder Sulfongruppen und insbesondere Aminogruppen oder Acetylaminogruppen substituierten Phenyl- oder Naphthylrest besitzen.

2,6-Dihydroxy-3-cyano- oder -3-carbonamido-4-alkylpyridine und 6-Hydroxy-2-pyridone, die in 1-Stellung durch gegebenenfalls substituiertes $C_{1-4}$-Alkyl, z. B. Methyl, Isopropyl, β-Hydroxyäthyl, β-Aminoäthyl, γ-Isopropoxypropyl oder durch —$NH_2$ oder eine substituierte Aminogruppe wie z. B. Dimethylamino oder Diäthylamino substituiert sind, in 3-Stellung eine Cyano- oder Carbonamidogruppe und in 4-Stellung eine $C_{1-4}$-Alkylgruppe, insbesondere Methyl, tragen.

Acetessigsäureanilide und Benzoylessigsäureanilide, die im Anilidkern gegebenenfalls mit $C_{1-4}$-Alkyl-, Alkoxy-, Alkylsulfonylgruppen, $C_{1-4}$-Hydroxyalkyl-, Alkoxyalkyl- oder Cyanalkylsulfonylgruppen, Sulfonamido-, N-alkylierten Sulfonamidogruppen, Sulfo und Halogen sowie Nitro-, Amino- oder Acetylaminogruppen substituiert sein können.

Phenole, die mit niedrigmolekularen Acylaminogruppen und/oder mit 1 bis 5 Kohlenstoffatome enthaltenden Alkylgruppen substituiert sind und in o-Stellung kuppeln.

Beispiele solcher Kupplungskomponenten sind:

2-Naphthol, 1-Naphthol, 1-Hydroxynaphthalin-4-, 5- oder -8-sulfonsäure oder -3,6- oder -4,8-disulfonsäure, 1,3- oder 1,5-Dihydroxynaphthalin, 1-Hydroxy-7-aminonaphthalin-3-sulfonsäure, 2-Naphthol-6-sulfonamid, 1-Hydroxy-7-amino oder -7-N-methyl- oder

N-acetylaminonaphthalin-3-sulfonsäure, 2-Naphthol-6-β-hydroxyäthylsulfon, 1-Hydroxy-6-amino- oder -6-N-Methyl- oder -6-N-Acetylaminonaphthalin-3-sulfonsäure, 1-Hydroxy-7-aminonaphthalin-3,6-disulfonsäure, 1-Hydroxy-6-aminonaphthalin-3,5-disulfonsäure, 1-Acetylamino-7-naphthol, 1-Hydroxy-6-N-(4′-aminophenyl)aminonaphthalin-3-sulfonsäure, 1-Hydroxy-5-aminonaphthalin-3-sulfonsäure, 1-Propionylamino-7-naphthol, 2-Hydroxyl-6-aminonaphthalin-4-sulfonsäure, 1-Carbomethoxyamino-7-naphthol, 1-Hydroxy-8-aminonaphthalin-5-sulfonsäure, 1-Carboäthoxyamino-7-naphthol, 1-Hydroxy-8-aminonaphthalin-5,7-disulfonsäure, 1-Dimethylaminosulfonyl-amino-7-naphthol, 6- oder 8-Acetylamino-2-naphthol, 1-Hydroxy-8-amino- oder -8-acetylaminonaphthalin-3,5- oder 3,6-disulfonsäure, 4-Acetylamino-2-naphthol, 2-Hydroxy-5-aminonaphthalin-4,7-disulfonsäure, 4-Methoxy-1-naphthol, 4-Acetylamino-1-naphthol, 1-Naphthol-3-, -4- oder -5-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1- oder -6-sulfonsäure, 2-Aminonaphthalin-5-, -6- oder -7-sulfonamid, 2-Aminonaphthalin-6-sulfonsäure-N-methyl-, -äthyl-, -isopropyl-, -β-oxyäthyl- oder -methoxypropylamid, 2-Aminonaphthalin-6-sulfanilid, 2-Aminonaphthalin-6-sulfonsäure-N-methylanilid, 1-Aminonaphthalin-3-, -4- oder -5-sulfonamid, 1-Aminonaphthalin-5-methyl- oder -äthylsulfon, 5,8-Dichlor-1-aminonaphthalin, 2-Phenylaminonaphthalin, 2-N-Methylaminonaphthalin, 2-N-Aethylaminonaphthalin, 2-Phenylaminonaphthalin-5-, -6- oder -7-sulfonamid, 2-(3′-Chlorphenylamino)-naphthalin-5-, -6- oder -7-sulfonamid, 6-Methyl-2-aminonaphthalin, 6-Brom-2-aminonaphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2′-, 3′- oder 4′-Methylphenyl)-3-methyl-5-pyrazolon, 1-[3′- oder 4′-(β-Hydroxyäthylsulfonyl)-phenyl]-3-methyl-5-pyrazolon, 1-(2′-Methoxyphenyl)-3-methyl-5-pyrazolon, 1-(2′-, 3′- oder 4′-Chlorphenyl)-3-methyl-5-pyrazolon, 1-(2′-, 3′- oder 4′-Nitrophenyl)-3-methyl-5-pyrazolon, 1-(2′,5′- oder 3′,4′-Dichlorphenyl)-3-methyl-5-pyrazolon, 1-(2′-, 3′- oder 4′-Sulfamoylphenyl)-3-methyl-5-pyrazolon, 1-(2′-, 3′- oder 4′-Methylsulfonylphenyl)-3-methyl-5-pyrazolon, 2,6-Dihydroxy-3-cyano-4-methylpyridin, 1-Methyl-3-cyano-4-äthyl-6-hydroxypyridon-(2), 1-Amino-3-cyano-4-methyl-6-hydroxypyridon-(2), 1-Phenyl-3-car-

bonamido-4-methyl-6-hydroxypyridon-(2), Acetoacetanilid, Acetoacet-o-, -m- oder -p-sulfoanilid, Acetoacet-4-(β-hydroxyäthylsulfonyl)-anilid, Acetoacet-o-anisidid, Acetoacetnaphthylamid, Acetoacet-o-toluidid, Acetoacet-o-chloranilid, Acetoacet-m- oder -p-chloranilid, Acetoacetanilid-3- oder -4-sulfonamid, Acetoacet-3- oder -4-aminoanilid, Acetoacet-m-xylidid, Benzoylessigsäureanilid, 4-Methylphenol, 3-Dialkylaminophenol, besonders 3-Dimethylamino- und 3-Diäthylaminophenol, 4-t-Butylphenol, 4-t-Amylphenol, 2- oder 3-Acetylamino-4-methylphenol, 2-Methoxycarbonylamino-4-methylphenol, 2-Aethoxycarbonylamino-4-methylphenol, 3,4-Dimethylphenol und 2,4-Dimethylphenol, 3-Amino-4-sulfophenol, 1-(4′-Aminophenyl)-3-methyl-5-pyrazolon, 1-(2′-, 3′- oder 4′-Sulfophenyl)-3-methyl-5-pyrazolon, 1-(2′-Chlor-4′- oder 5′-sulfophenyl)-3-methyl-5-pyrazolon, 1-(2′-Methyl-6′-chlorphenyl)-3-methyl-5-pyrazolon, 1-(2′-Methyl-4′-sulfophenyl)-3-methyl-5-pyrazolon, 1-(2′-, 3′- oder 4′-Chlor- oder Methyl- oder Sulfophenyl)-3-carboxy-5-pyrazolon, 1-[5′-sulfonaphthyl(2′)]-3-methyl-5-pyrazolon, 1-[4″-Amino-2′,2″-disulfostilben-(4′)]-3-methyl-5-pyrazolon, 1-Aethyl-3-cyano-4-methyl-6-hydroxy-pyridon-(2), 1-Aethyl-3-sulfomethyl-4-methyl-6-hydroxy-pyridon-(2), 2,6-Dihydroxy-4-methyl-3-sulfomethylpyridin, 2,4,6-Trihydroxypyrimidin, 1-Carbopropoxyamino-7-naphthol, 1-Hydroxy-8-aminonaphthalin-3-sulfonsäure.

Für die Herstellung der Azomethinfarbstoffe der Formel (7) werden in bekannter Weise die oben genannten aromatischen Amine der Formel (8) mit o-Hydroxybenzaldehyden oder o-Hydroxynaphthaldehyden kondensiert.

Geeignete Aldehyde sind beispielsweise :

2-Hydroxybenzaldehyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor-5-nitro-2-hydroxybenzaldehyd, 4-Methoxy-2-hydroxybenzaldehyd, 1-Hydroxy-2-naphthaldehyd und dessen in 4-Stellung chlorierter Abkömmling ; und 2-Hydroxy-1-naphthaldehyd.

Bevorzugt sind diejenigen erfindungsgemässen Chromkomplexe, worin Y ein Stickstoffatom und K der Rest einer Kupplungskomponente der Naphthalinreihe ist, insbesondere der Rest einer Aminonaphthol-mono- oder disulfonsäure.

Gegebenenfalls kann eine freie Aminogruppe im Rest D und/oder K nach der Kupplung mit einem Acylierungs- oder Alkylierungsmittel in eine Acylamino- oder Alkylaminogruppe umgewandelt werden, und ebenso kann eine Hydroxygruppe im Rest D und/oder K durch Alkylierung in eine Alkoxygruppe übergeführt werden.

Eine Verfahrensvariante zur Herstellung des 1:1-Chromkomplexazomethinfarbstoffes der Formel (6) ist dadurch gekennzeichnet, dass man den 1:1-Chromkomplex der Formel (6) statt mit dem Azomethin der Formel (7) auch mit einem Gemisch des Amins der Formel (8) und einem o-Hydroxybenzaldehyd oder einem o-Hydroxynaphthaldehyd herstellen kann.

Die Amine der Formel (8), die Kupplungskomponenten der Formel (9) und die o-Hydroxybenzaldehyde und o-Hydroxynaphthaldehyde können in Aminogruppen überführbare Reste, wie z. B. die Acetylamino- und die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluss an die Herstellung der Farbstoffe der Formel (7) oder die Herstellung des 1:1-Chromkomplexes der Formel (6).

Die Herstellung der 1:1-Chromkomplexe geschieht nach an sich bekannten Methoden. Man stellt z. B. den 1:1-Chromkomplex der Verbindung der Formel (6) her, indem man die Metallfreie Verbindung in saurem Medium mit einem Salz des dreiwertigen Chroms wie Chromchlorid, Chromfluorid oder Chromsulfat umsetzt, gegebenenfalls in Anwesenheit von löslichkeitsfördernden oder die Chromierung beschleunigenden Mitteln, wie z. B. Alkoholen oder Hydroxycarbonsäuren. Anschliessend lässt man den 1:1-Komplex bei pH-Werten von 5-11 mit einer Verbindung, welche den Rest B einführt, reagieren.

Als den Rest B einführende Verbindungen kommen z. B. insbesondere in Betracht: 8-Hydroxychinolin, 5-Chlor-8-hydroxychinolin, 8-Hydroxy-5-, -6- oder 7-sulfochinolin, 5-Hydroxyacridin, 6-Hydroxy-4,7-phenanthrolin, Pyridin-2-carbonsäure, 8-Carboxychinolin, 5,7-Dibrom-8-hydroxychinolin, 2-Hydroxyanilin, 2-Hydroxy-1-aminonaphthalin, Alanin, Prolin, Glycin, Lysin, Asparaginsäure.

Erfolgt die Umsetzung des 1:1-Chromkomplexes der Formel (6) mit der den Rest B einführenden organischen Verbindung gegebenenfalls in Gegenwart eines der weiter oben angegebenen von Wasser verschiedenen, farblosen, monofunktionellen Liganden L, so erhält man einen Chromkomplex der Formel

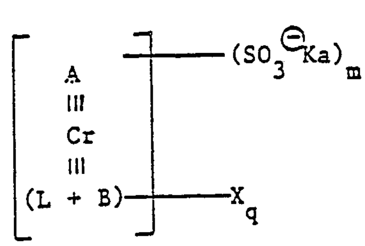

(10)

worin A, B, L, Ka, X und m die unter Formel (1) angegebenen Bedeutungen haben und q = 0, 1 oder 2 ist.

Falls die Reaktivgruppe(n) X in dem Chromkomplex der Formel (1) an den Rest A gebunden ist, erfolgt die Einführung der Reaktivgruppe(n) zweckmässigerweise nach Herstellung des 1:1-Chromkomplexes der Formel (6) oder vorzugsweise im Anschluss an die Umsetzung des 1:1-Chromkomplexes der Formel (6) mit der den Rest B einführenden organischen Verbindung. Falls die Reaktivgruppe(n) X in dem Chromkomplex der Formel (1) an den Rest B gebunden ist, erfolgt deren Einführung vorzugsweise im Anschluss an die Umsetzung mit dem 1:1-Chromkomplex der Formel (6).

Die Einführung der faserreaktiven Gruppe(n) X in den 1:1-Chromkomplex der Formel (6) oder in den Chromkomplex der Formel (10) erfolgt in an sich bekannter Weise dadurch, dass man diese Chromkomplexe mit einem oder zwei den (die) Rest(e) X einführenden oder bildenden Mittel(n) umsetzt, wobei die Reste A und/oder B in den Formeln (6) und (10) funktionelle Gruppen, welche zur Bindung der faserreaktiven Gruppe(n) X geeignet sind, enthalten müssen. Solche zur Bindung der Reste X geeignete Gruppen sind z. B. gegebenenfalls monoalkylierte Aminogruppen, wie beispielsweise $—NH_2$, $—N(CH_3)H$ oder $—N(C_2H_5)H$ oder z. B. die β-Oxyäthylsulfonylgruppe.

Die Einführung der Reaktivgruppe(n), die über eine Oxy-, Thio- oder vorzugsweise Aminogruppe gebunden ist (sind), erfolgt dadurch, dass man die Chromkomplexe der Formeln (6) und (10) mit einem (oder zwei) Acylierungsmittel(n), welche(s) einen oder zwei gegebenenfalls voneinander verschiedene Rest(e) X einführt (einführen), umsetzt.

Die Bildung der direkt an die Reste A und/oder B gebundenen faserreaktiven Gruppe(n), wie z. B. die β-Sulfatoäthylsulfonylgruppe, erfolgt in an sich bekannter Weise z. B. durch Sulfatierung der oben genannten β-Oxyäthylsulfonylgruppe.

Gegenstand der Erfindung ist ferner ein Verfahren zum Färben textiler Materialien mit Chromkomplexen, welches dadurch gekennzeichnet ist, dass man eine wässrige Flotte, welche eine den Rest B einführende Verbindung und den 1:1-Chromkomplex der Formel

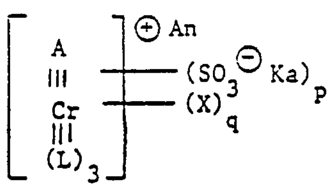

(11)

worin A, L, Ka und X die unter Formel (1) angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschliessend alkalisch stellt und die Färbung fertigstellt, und wobei, falls p = 0 ist, der Rest B mindestens eine ($SO_3^{\ominus}Ka$)-Gruppe, und, falls q = 0 ist, mindestens einen faserreaktiven Rest X enthält.

Insbesondere setzt man die den Rest B einführende Verbindung und den 1:1-Chromkomplex der Formel (11) in dem molaren Verhältnis 2:1 bis vorzugsweise 1:1 ein.

Eine bevorzugte Verfahrensvariante ist dadurch gekennzeichnet, dass man die Färbeflotte, welche die oben angegebenen Komponenten enthält, innerhalb von 10 bis 45 Minuten auf 60 bis 80 °C erwärmt, diese Flottentemperatur für 10 bis 45 Minuten beibehält und anschliessend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiteren 10 bis 30 Minuten bei 85 °C nachbehandelt.

Als weitere Zusätze kann die Flotte z. B. eine anorganische oder organische Säure, insbesondere Essigsäure, ein Alkali- oder Ammoniumsalz, insbesondere Ammoniumsulfat und gegebenenfalls ein Egalisiermittel enthalten.

Der Chromkomplex der Formel (11) wird, wie weiter oben beschrieben, durch Umsetzung eines Azo- oder Azomethinfarbstoffes, insbesondere eines solchen Farbstoffes der Formel (2), gegebenenfalls in Gegenwart eines von Wasser verschiedenen Liganden L, mit einem der genannten Chromierungsmittel erhalten, wobei die Einführung der faserreaktiven Reste an einer beliebigen Stelle des Verfahrens erfolgen kann, vorzugsweise nach der Herstellung des 1:1-Chromkomplexes.

In dem erfindungsgemässen Verfahren verwendet man insbesondere 1:1-Chromkomplexe der Formel

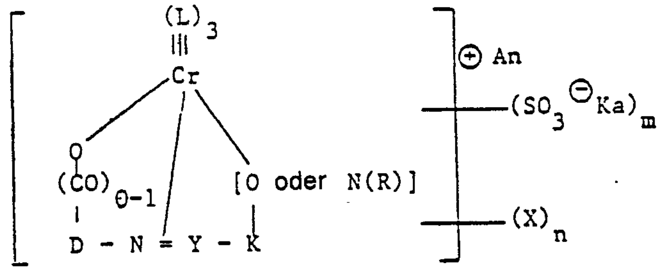

(12)

worin D, K, L, R, Ka, X, Y, m und n die unter Formel (3) angegebenen Bedeutungen haben und An ein Anion ist; vorzugsweise verwendet man Chromkomplexe der Formel

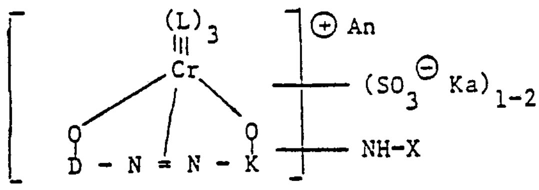

(13)

worin D, K, L, Ka und X die unter Formel (4) angegebenen Bedeutungen haben und An ein Anion ist; vorzugsweise verwendet man ferner Chromkomplexe der Formel

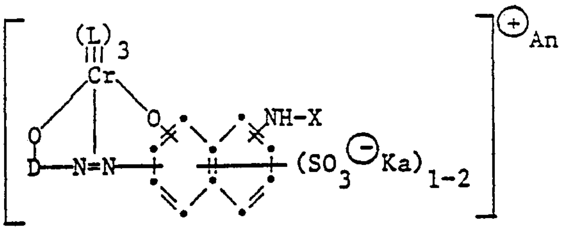

(14)

worin D, L, Ka und X die unter Formel (5) angegebenen Bedeutungen haben und An ein Anion ist.

In dem erfindungsgemässen Verfahren kommen als den Rest B einführende Verbindungen sämtliche der weiter oben genannten Verbindungen in Betracht, wobei in dem Rest B enthaltene acylierbare Aminogruppen, die nicht an der Komplexbildung beteiligt sind, vorgängig mit einem den faserreaktiven Rest X einführenden Acylierungsmittel umgesetzt sein können. Insbesondere kommen 8-Hydroxychinolin und Pyridin-2-carbonsäure in Betracht.

Gegebenenfalls kann das erfindungsgemässe Verfahren in Gegenwart einer von Wasser verschiedenen farblosen monofunktionellen Verbindung L ausgeführt werden, wobei die vorgängig genannten Verbindungen in Betracht kommen.

Nach dem erfindungsgemässen Verfahren wird somit der Chromkomplex der Formel (1) während des Färbens gebildet, wobei die gleichen färberischen Vorteile erhalten werden wie mit den in Substanz hergestellten, isolierten Farbstoffen der Formel (1).

Die erfindungsgemässen Chromkomplexe der Formel (1) sowie die in dem erfindungsgemässen Färbeverfahren hergestellten Chromkomplexe eignen sich zum Färben von stickstoffgruppenhaltigen oder hydroxygruppenhaltigen Materialien, wie z. B. Wolle, Seide, Leder, synthetische Polyamide und Baumwolle. Man erhält egale Färbungen in gelben, braunen, orangen, roten, blauen, grauen, grünen und schwarzen Tönen mit guten Allgemeinechtheiten, insbesondere sehr guter Reib-, Nass-, Nassreib- und Lichtechtheit. Ferner sind die erfindungsgemässen Farbstoffe sehr gut mit faserreaktiven Säurefarbstoffen kombinierbar. Das oben genannte Textilmaterial kann in den verschiedensten Verarbeitungsformen vorliegen, wie z. B. als Faser, Garn, Gewebe oder Gewirke.

Aus der FR-A-2 333 029 sind ähnliche Farbstoffe bekannt, die jedoch nicht alle guten Eigenschaften der erfindungsgemässen Farbstoffe aufweisen. Aus der FR-A-1 310 178 sind Chromkomplexfarbstoffe bekannt, die frei von Sulfonsäuregruppen sind; und aus der DE-C-933 622 ist ein Verfahren zur Herstellung von Chromkomplexfarbstoffen bekannt, die keine faserreaktive Gruppe enthalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

(Siehe Formel Seite 11 f.)

Beispiel 1

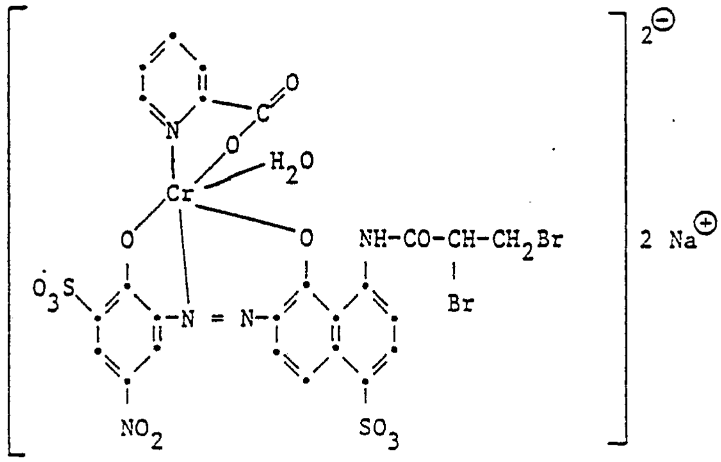

48,44 T des Monoazofarbstoffes, der durch Diazotierung von 4-Nitro-6-sulfo-2-aminophenol und Kupplung der Diazoverbindung auf 1-Naphthol-8-amino-5-sulfonsäure erhalten wird, werden in bekannter Weise zum 1 : 1-Chromkomplex umgesetzt. Das Produkt wird in 400 T Wasser suspendiert und 12,3 T Pyridin-2-carbonsäure werden zugefügt. Unter Erwärmen auf 75-80° wird der pH mit NaOH(2N) auf 7-7,3 gehalten, Lösung tritt ein. Unter ständiger pH-Kontrolle wird 1 h bei 75-80° gerührt.

Nach beendeter Anlagerung wird auf 20-25° gekühlt. 34 T 1,2-Dibrompropionyl-chlorid, mit 5 ml Aceton verdünnt, werden in 20-30 Min. bei 20-25° zugetropft, der pH wird mit NaOH(2N) auf 6,5-7 gehalten. Nach zweistündigem Rühren unter pH-Kontrolle wird der erhaltene reaktive Chrom-Komplex klärfiltriert und die Lösung wird eingedampft. Der erhaltene Farbstoff färbt Wolle gemäss Färbebeispiel 2 in marineblauen Tönen mit ausgezeichneten Echtheiten.

Beispiel 2

53,9 T des 1 : 1 Chromkomplexes des Monoazofarbstoffes, der durch alkalische Kupplung von 1-Diazo-2-naphthol-4-sulfonsäure auf 2-Amino-5-naphthol-7-sulfonsäure erhalten wird, werden in 500 Teilen Wasser mit verdünnter Natronlauge bei pH 7 gelöst. Nach Zugabe von 14,5 T 8-Oxichinolin wird der pH-Wert mit verdünnter Natronlauge auf 6,5 eingestellt und das Reaktionsgemisch 30 Min. bei 90-95 °C gerührt. Die Farbstofflösung wird auf 50 °C gekühlt und mit 15 Teilen Natriumbicarbonat versetzt. Nach 10-minütigem Rühren wird mit 200 Teilen Eis auf 10-15 °C gekühlt und in ca. 1 Stunde 30 Teile 1,2-Dibrompropionylchlorid zugetropft und weitere 2-3 Stunden bei Raumtemperatur nachgeführt. Der gebildete, gelöste Farbstoff der Formel

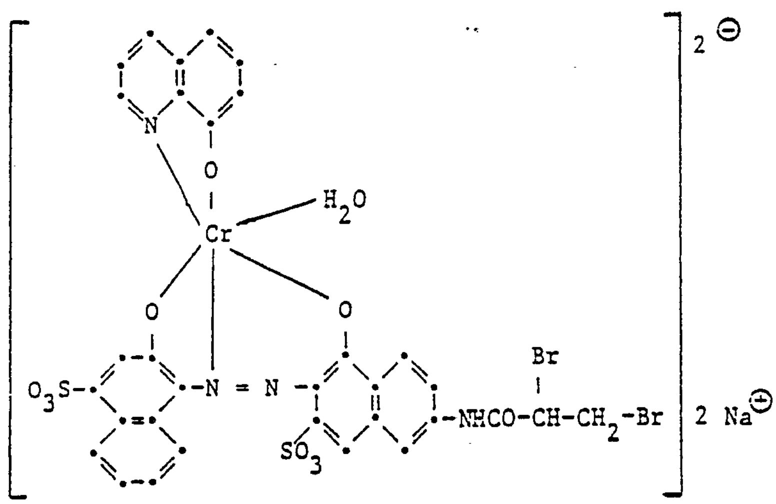

wird zur Trockne eingedampft. Der in Form eines sehr gut wasserlöslichen, dunklen Pulvers erhaltene Farbstoff färbt Wolle gemäss den Angaben des Färbebeispiels 2 in dunkelblauen Tönen mit ausgezeichneten Echtheitseigenschaften.

Weitere Farbstoffe mit ähnlichen Eigenschaften erhält man in analoger Weise durch Umsetzen der 1 : 1 Chromkomplexe der in der folgenden Tabelle 1 in Kolonne I angegebenen Monoazoverbindungen mit

den in Kolonne II aufgeführten farblosen Verbindungen und anschliessende Acylierung des erhaltenen 1 : 2 Chromkomplexes mit 1,2-Dibrompropionylchlorid. Diese färben Wolle gemäss den Angaben der Färbebeispiele 1 oder 2 in den in Kolonne III angegebenen Nuancen.

Tabelle 1

| Beispiel | I | II | III |
|---|---|---|---|
| 3 | 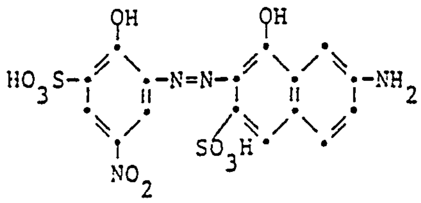 | Pyridin-2-carbonsäure | grau |
| 4 | dito | 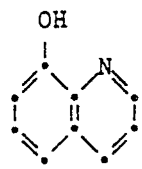 | grau |
| 5 | 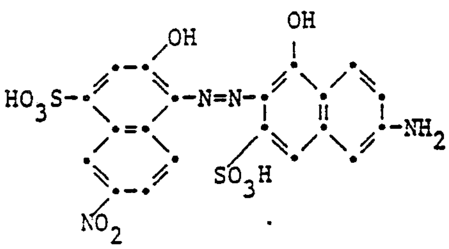 | 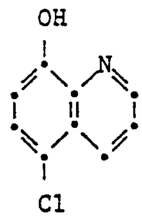 | grün-grau |
| 6 | dito | 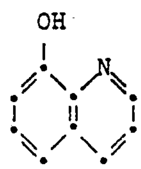 | grau |
| 7 | 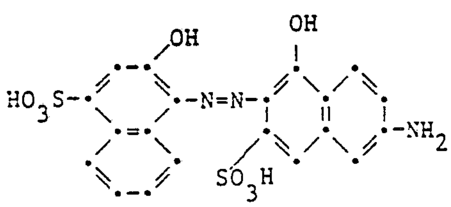 | 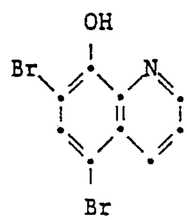 | grau-blau |
| 8 | dito | 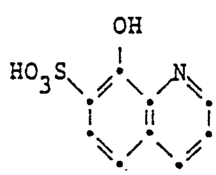 | grau-blau |
| 9 | 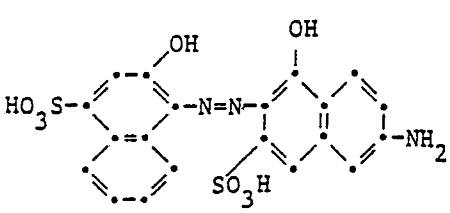 | Pyridin-2-carbonsäure | grau-blau |

Tabelle 1 (Fortsetzung)

| Beispiel | I | II | III |
|---|---|---|---|
| 10 | dito | 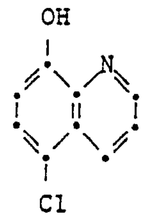 | graublau |
| 11 | dito | Glycin | blau |
| 12 | dito | Asparaginsäure | blau |
| 13 | 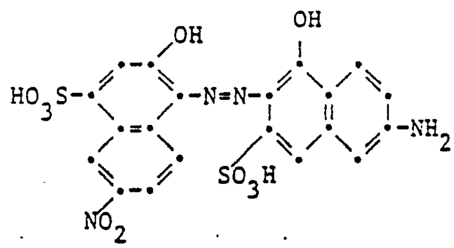 | Pyridin-2-carbonsäure | grüngrau |
| 14 | dito | 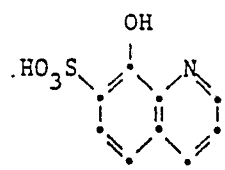 | grüngrau |
| 15 | dito | 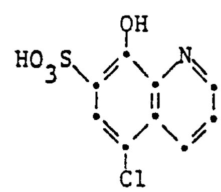 | grüngrau |
| 16 | 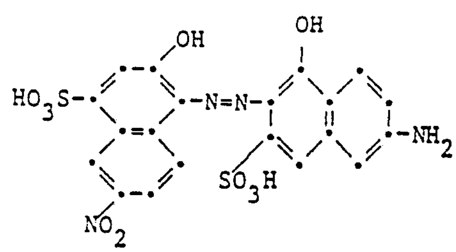 | Lysin | grüngrau |
| 17 | dito | Glycin | grüngrau |
| 18 | dito | Asparaginsäure | grüngrau |

Tabelle 1 (Fortsetzung)

| Beispiel | I | II | III |
|---|---|---|---|
| 19 | 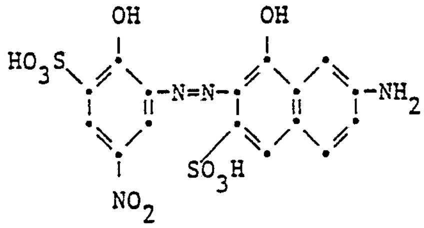 | 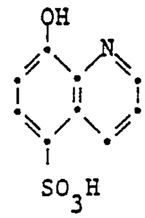 | rotstichig grau |
| 20 | dito | 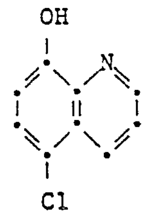 | rotstichig grau |
| 21 | dito | Glycin | rotstichig grau |
| 22 | dito | Asparaginsäure | rotstichig grau |
| 23 | 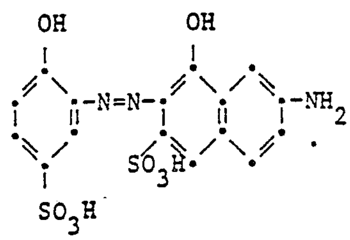 | 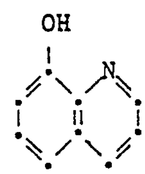 | violett-grau |
| 24 | dito | Pyridin-2-carbonsäure | violett |
| 25 | 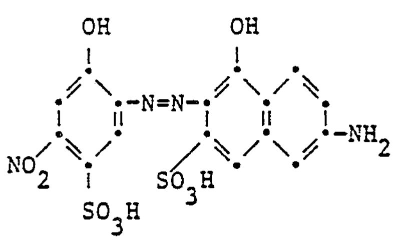 | 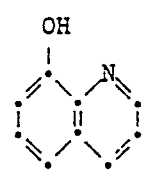 | blau |
| 26 | 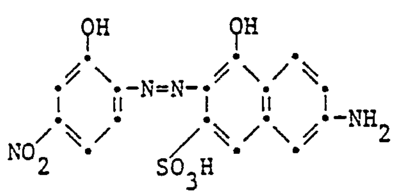 | Pyridin-2-carbonsäure | blaugrau |

Tabelle 1 (Fortsetzung)

| Beispiel | I | II | III |
|---|---|---|---|
| 27 | 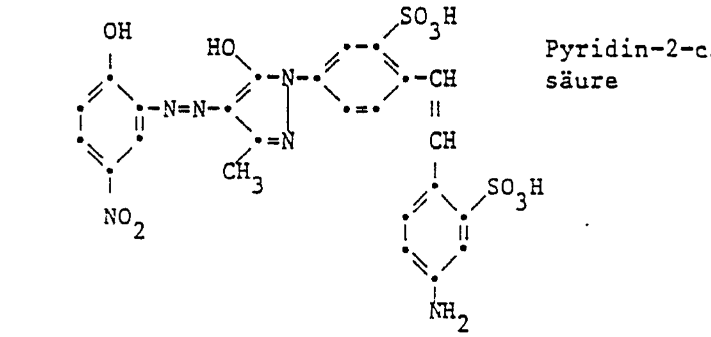 | Pyridin-2-carbonsäure | orange |
| 28 | dito | 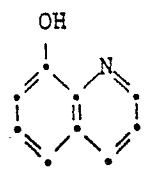 | braun-orange |
| 29 | 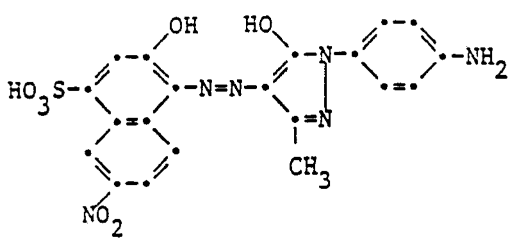 | Pyridin-2-carbonsäure | rot |
| 30 | 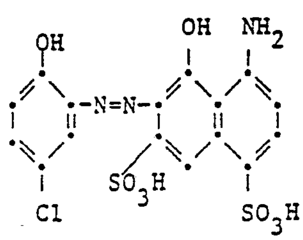 | 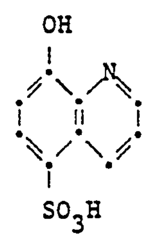 | blau |
| 31 | dito | Pyridin-2-carbonsäure | marine-blau |
| 32 | dito | 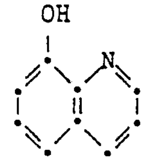 | marine-blau |
| 33 | dito | Glycin | grau |
| 34 | dito | Alanin | grau |
| 35 | dito | Lysin | grau |

Tabelle 1 (Fortsetzung)

| Beispiel | I | II | III |
|---|---|---|---|
| 36 | dito | Asparaginsäure | grüngrau |
| 37 | dito | Prolin | grau |
| 38 | 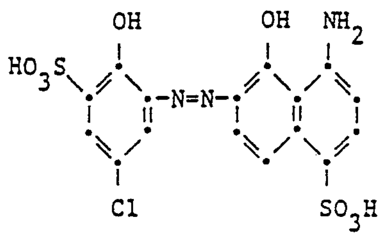 | Pyridin-2-carbonsäure | blaugrau |
| 39 | dito | 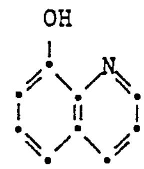 | grüngrau |
| 40 | dito | Glycin | violett-blau |
| 41 | dito | Alanin | grau |
| 42 | dito | Lysin | violett |
| 43 | dito | Asparaginsäure | grau |
| 44 | dito | Prolin | violett |
| 45 | 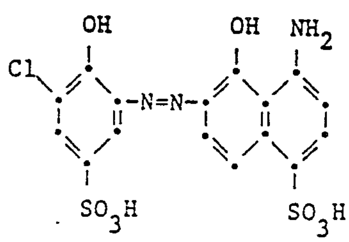 | Pyridin-2-carbonsäure | grau |
| 46 | dito | 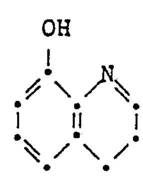 | grau |
| 47 | 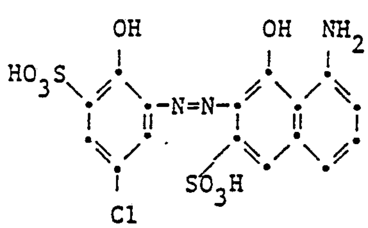 | Pyridin-2-carbonsäure | marine-blau |

Tabelle 1 (Fortsetzung)

| Beispiel | I | II | III |
|---|---|---|---|
| 48 | dito | 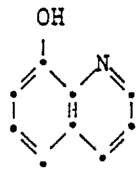 | grüngrau |
| 49 | 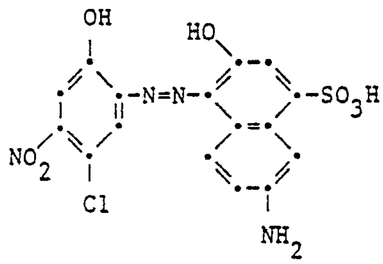 | Pyridin-2-carbonsäure | grau |
| 50 | dito | 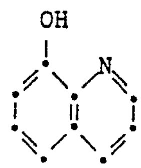 | grüngrau |
| 51 | 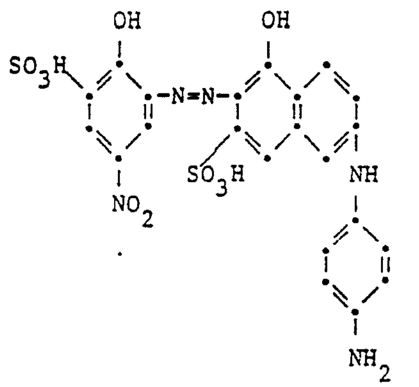 | dito | grau |
| 52 | dito | Pyridin-2-carbonsäure | grau |
| 53 | dito | Prolin | grau |
| 54 | 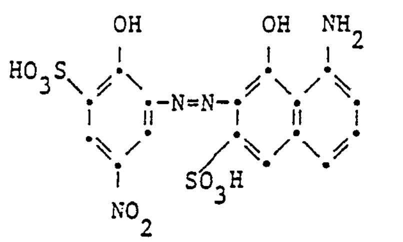 | Pyridin-2-carbonsäure | grau |
| 55 | dito | 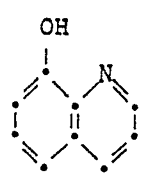 | grüngrau |
| 56 | 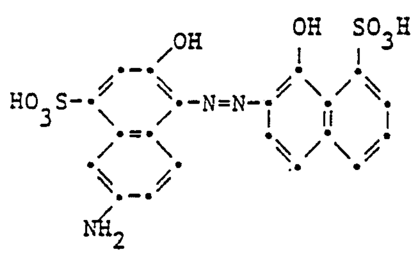 | dito | grau |

Tabelle 1 (Fortsetzung)

| Beispiel | I | II | III |
|---|---|---|---|
| 57 | 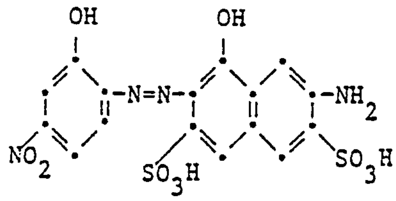 | dito | grau |
| 58 | 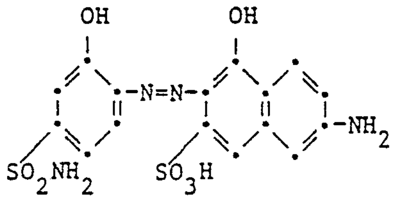 | dito | grau |
| 59 | 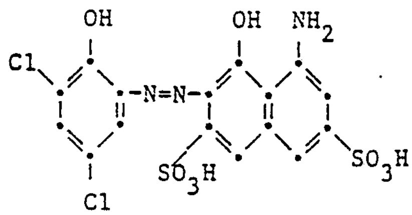 | Pyridin-2-carbonsäure | marine-blau |
| 60 | dito | 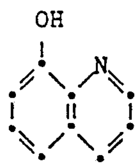 | marine-blau |
| 61 | 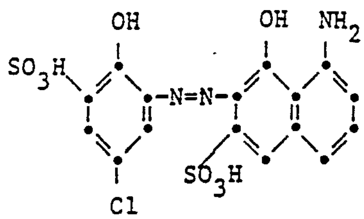 | 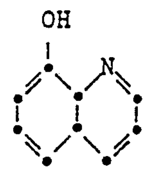 | marineblau |
| 62 | dito | 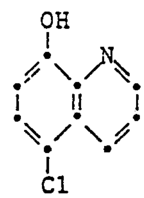 | graublau |
| 63 | 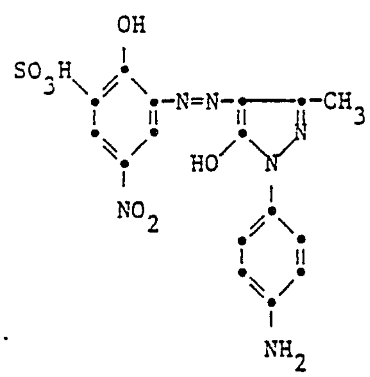 | Pyridin-2-carbonsäure | orange |

Weitere Farbstoffe mit ähnlichen Eigenschaften erhält man in analoger Weise durch Umsetzen der 1 : 1-Chromkomplexe der in der folgenden Tabelle 2 in Kolonne I angegebenen Aminoazoverbindungen, welche mit den in Kolonne II angegebenen Reaktivgruppen umgesetzt sind, mit den in Kolonne III aufgeführten farblosen Verbindungen. Die neuen Farbstoffe färben Wolle egal in den in Kolonne IV angegebenen Nuancen.

Tabelle 2

| Beispiel | I | II | III | IV |
|---|---|---|---|---|
| 64 | 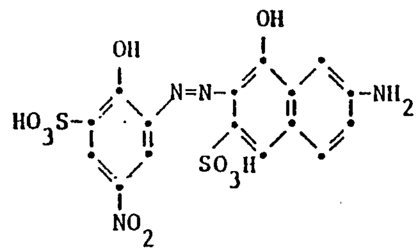 | 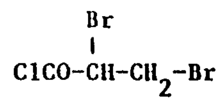 | 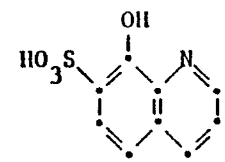 | rotstichig grau |
| 65 | 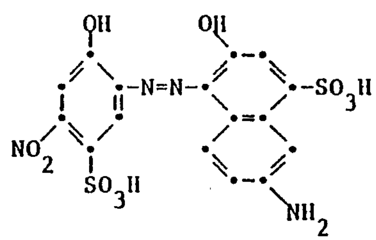 | dito | dito | grünstichig grau |
| 66 | 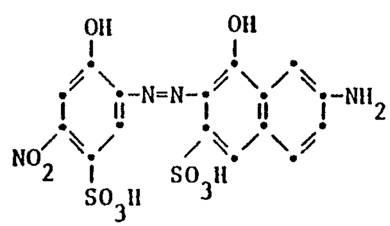 | dito | dito | rotstichig grau |

Tabelle 2 (Fortsetzung)

| Beispiel | I | II | III | IV |
|---|---|---|---|---|
| 67 | 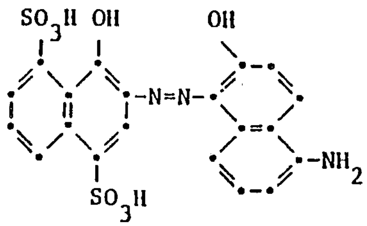 | 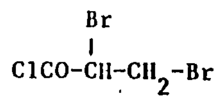 | 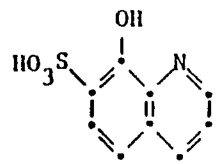 | graublau |
| 68 | 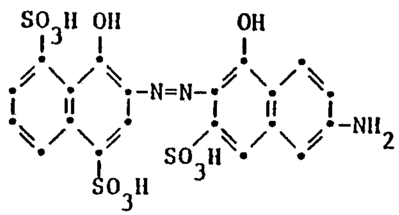 | dito | dito | blau |
| 69 | 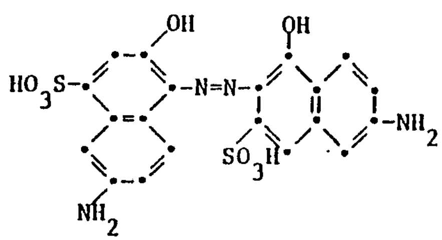 | dito | dito | grau |

Tabelle 2 (Fortsetzung)

| Beispiel | I | II | III | IV |
|---|---|---|---|---|
| 70 | 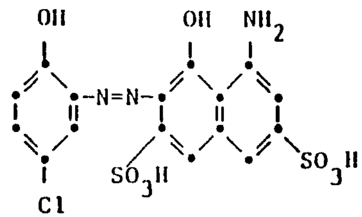 | 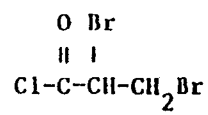 | Pyridin-2-carbon-säure | marineblau |
| 71 | dito | dito | 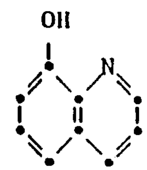 | marineblau |
| 72 | dito | dito | Glycin | grau |
| 73 | dito | dito | Alanin | grau |
| 74 | dito | dito | Lysin | grau |
| 75 | dito | dito | Asparaginsäure | blau |
| 76 | dito | dito | Prolin | blaugrau |

Tabelle 2 (Fortsetzung)

| Beispiel | I | II | III | IV |
|---|---|---|---|---|
| 77 | 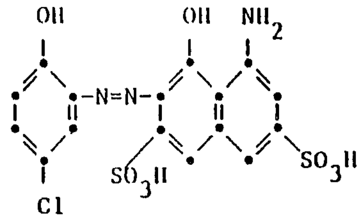 | 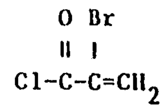 | Pyridin-2-carbon-säure | grau |
| 78 | 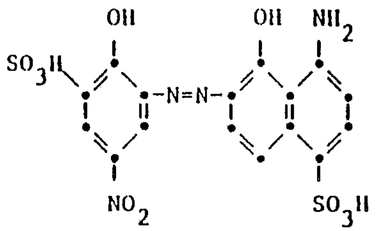 | 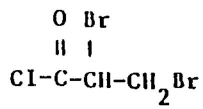 | 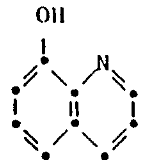 | grau-schwarz |
| 79 | 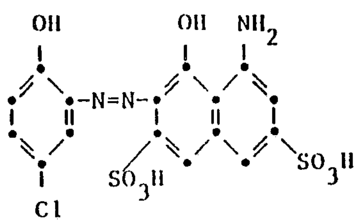 | 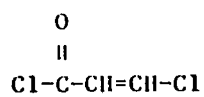 | Pyridin-2-carbon-säure | blau |

Tabelle 2 (Fortsetzung)

| Beispiel | I | II | III | IV |
|---|---|---|---|---|
| 80 | 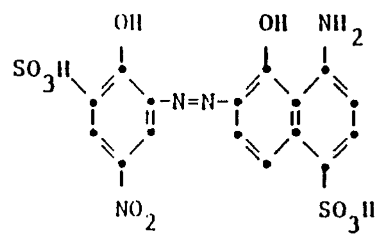 | 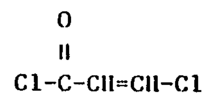 | Pyridin-2-carbon-säure | grünblau |
| 81 | 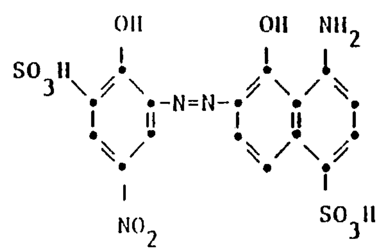 | 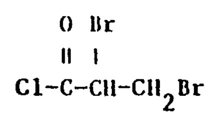 | Glycin | graublau |

Tabelle 2 (Fortsetzung)

| | I | II | III | IV |
|---|---|---|---|---|
| 82 | 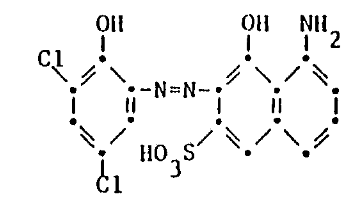 | 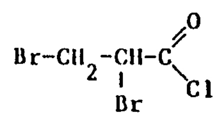 | 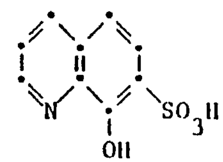 | grau |
| 83 | 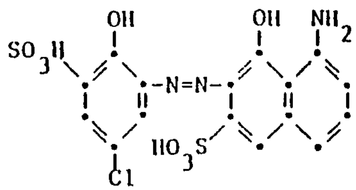 | dito | 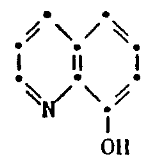 | graublau |
| 84 | 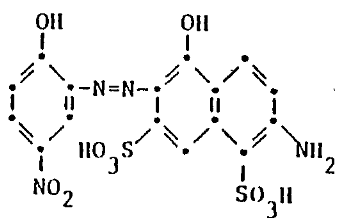 | dito | dito | blauschwarz |

Tabelle 2 (Fortsetzung)

| Beispiel | I | II | III | IV |
| --- | --- | --- | --- | --- |
| 85 | 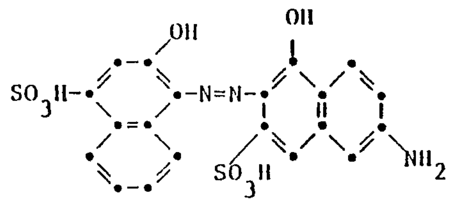 | 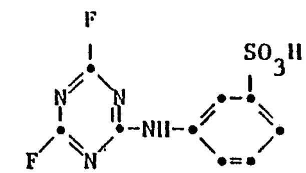 | Pyridin-2-carbon-säure | blau |
| 86 | dito | 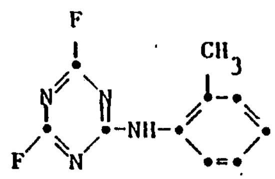 | Pyridin-2-carbon-säure | blau |
| 87 | dito | 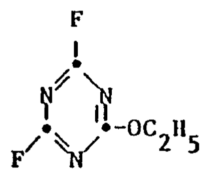 | Pyridin-2-carbon-säure | blau |
| 88 | 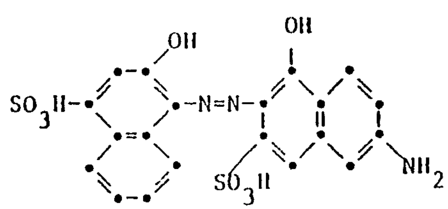 | 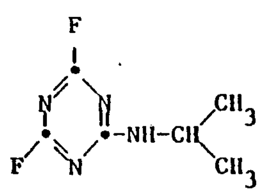 | Pyridin-2-carbonsäure | blau |

Tabelle 2 (Fortsetzung)

| Beispiel | I | II | III | IV |
|---|---|---|---|---|
| 89 | 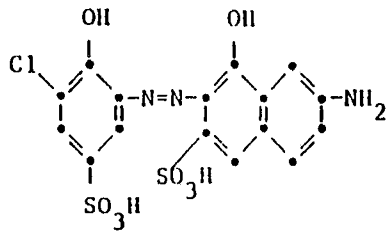 | $ClCOCHBrCH_2Br$ | 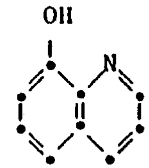 | violett |
| 90 | 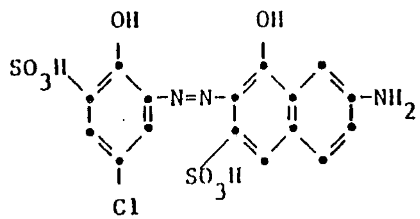 | $ClCOCHBrCH_2Br$ | dito | marineblau |
| 91 | 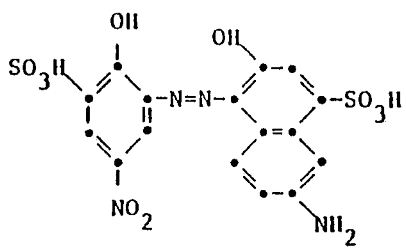 | $ClCOCHBrCH_2Br$ | dito | grau |
| 92 | 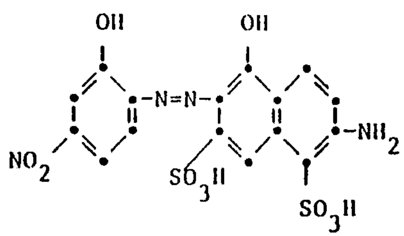 | $ClCOCHBrCH_2Br$ | dito | grünblau |

Tabelle 2 (Fortsetzung)

| Beispiel | I | II | III | IV |
|---|---|---|---|---|
| 93 | 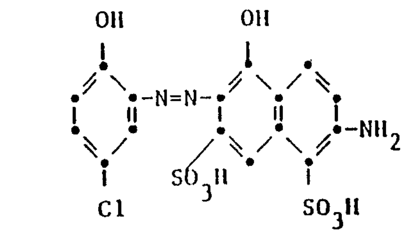 | $ClCOCHBrCH_2Br$ | 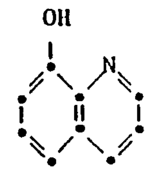 | rotstichig blau |
| 94 | 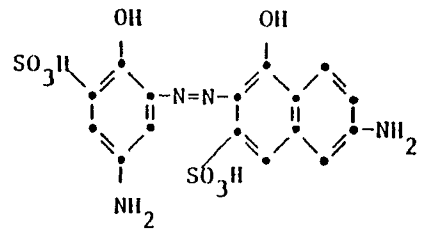 | $ClCOCHBrCH_2Br$ | dito | grau |
| 95 | 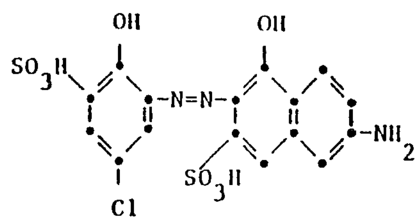 | $ClCOCHBrCH_2Br$ | dito | violett |
| 96 | 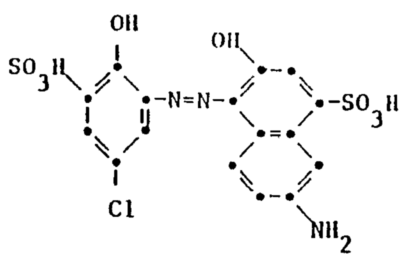 | $ClCOCHBrCH_2Br$ | dito | marine-blau |

Tabelle 2 (Fortsetzung)

| Beispiel | I | II | III | IV |
|---|---|---|---|---|
| 97 | 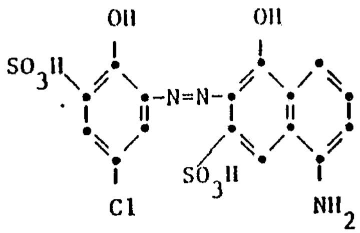 | $ClCOCHBrCH_2Br$ | 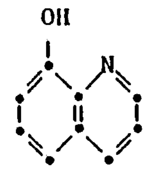 | violett |
| 98 | 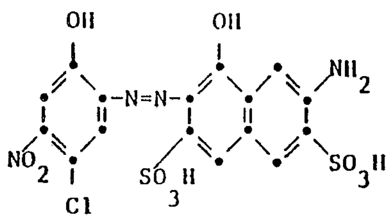 | $ClCOCHBrCH_2Br$ | dito | graublau |
| 99 | 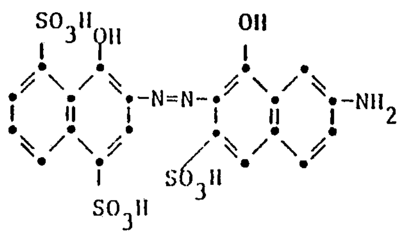 | $ClCOCHBrCH_2Br$ | dito | blau |
| 100 | 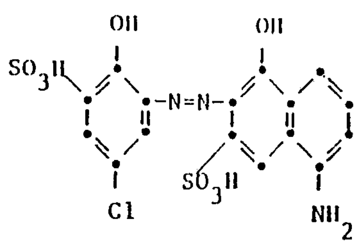 | $ClCOCHBrCH_2Br$ | Pyridin-2-carbonsäure | violett |

Tabelle 2 (Fortsetzung)

| Beispiel | I | II | III | IV |
|---|---|---|---|---|
| 101 | 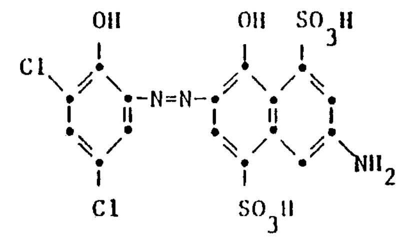 | $ClCOCHBrCH_2Br$ | Pyridin-2-carbonsäure | graublau |
| 102 | dito | $ClCOCHBrCH_2Br$ | 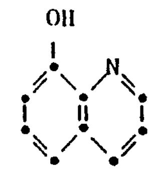 | marineblau |
| 103 | 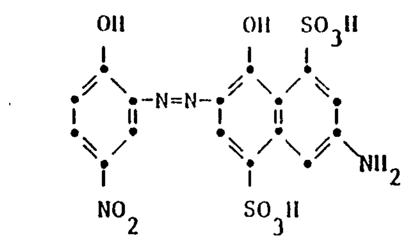 | $ClCOCHBrCH_2Br$ | dito | violett |
| 104 | dito | $ClCOCHBrCH_2Br$ | Pyridin-2-carbonsäure | violett |
| 105 | 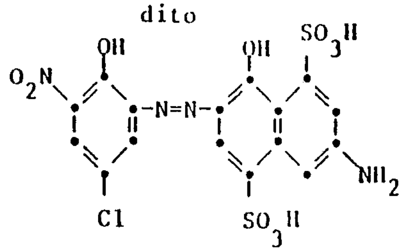 | $ClCOCHBrCH_2Br$ | 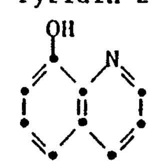 | grau |
| 106 | dito | $ClCOCHBrCH_2Br$ | Pyridin-2-carbonsäure | grau |

Tabelle 2 (Fortsetzung)

| Beispiel | I | II | III | IV |
|---|---|---|---|---|
| 107 | 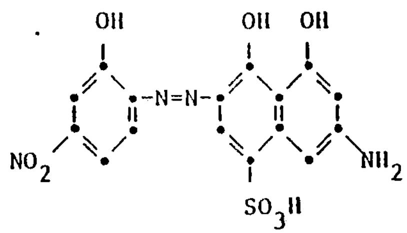 | $ClCOCHBrCH_2Br$ | 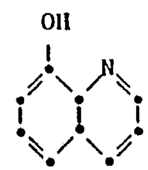 | grünstichig grau |
| 108 | dito | $ClCOCHBrCH_2Br$ | Pyridin-2-carbonsäure | grünstichig grau |

Beispiel 109

41,9 Teile des Monofarbstoffs aus diazotierter 1-Hydroxy-2-amino-4-nitrobenzol-6-sulfonsäure und 1-Phenyl-3-methyl-5-pyrazolon werden in Form des 1 Atom Chrom pro Molekül Azoverbindung enthaltenden 1 : 1-Chromkomplexes unter Rühren in 600 Teilen Wasser von 60-70 °C angeschlämmt und durch Zugabe von 5n-Natriumhydroxidlösung bis zum pH-Wert 9,0-9,5 in Lösung gebracht. Unter Einhalten der Temperatur von 60-70 °C wird anschliessend in 1 Stunde die Lösung von 36,0 Teilen krist. Natriumsulfid ($Na_2S \times 9\ H_2O$) in 100 Teilen Wasser zugetropft. Die unter Farbumschlag von gelborange nach orangerot verlaufende Reduktion der Nitrogruppe ist nach 2-3 Stunden Rühren bei gleicher Temperatur beendet. Der erhaltene, aminogruppenhaltige 1 : 1-Chromkomplex wird durch Neutralisieren der Reaktionslösung und Zugabe von Natriumchlorid abgeschieden, durch Filtration isoliert und mit verdünnter Natriumchloridlösung gewaschen. Der erhaltene Filterkuchen wird in 600 Teilen Wasser von 60-65° angeschlämmt und durch Zugabe von 2n-Natriumhydroxidlösung bei pH 8,5-9,0 gelöst. Nach Zugabe von 12,3 Teilen Pyridin-2-carbonsäure wird das Reaktionsgemisch unter Einhalten eines pH-Bereichs von 8,0-9,0 solange bei 60-70 °C gerührt, bis die Umsetzung des 1 : 1-Chromkomplexes mit dem Liganden beendet ist. Die erhaltene orangerote Reaktionslösung wird anschliessend auf 10-15 °C gekühlt und innerhalb 1 Stunde mit der Lösung von 30 Teilen 1 : 2-Dibrompropionylchlorid in 30 Teilen Aceton versetzt, wobei zugleich durch Zutropfen von 2n-Natriumhydroxidlösung ein pH-Bereich von 6,0-6,5 eingehalten wird. Nach weiteren 2 Std. Rühren bei Raumtemperatur wird der Metallkomplex von folgender Konstitution

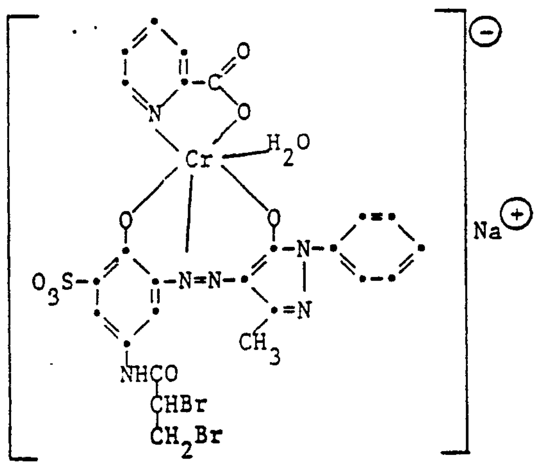

durch Zugabe von Natriumchlorid aus der Reaktionslösung abgeschieden, durch Filtration isoliert und im Vakuum bei 70 °C getrocknet.

Der neue, wasserlösliche Farbstoff ergibt auf Wollmaterialien nach dem angegebenen Färbeverfahren volle, nass- und lichtechte Orangetöne.

Werden zum Umsetzung mit dem aminogruppenhaltigen 1 : 1-Chromkomplex anstelle von Pyridin-2-carbonsäure 14,5 Teile 8-Hydroxychinolin verwendet, so wird ein etwas rotstichigerer Orangefarbstoff mit den gleichen koloristischen Eigenschaften erhalten.

Weitere Farbstoffe mit ähnlichen Eigenschaften sind in analoger Weise zugänglich durch Umsetzen der in der folgenden Tabelle 3 in Kolonne I angegeben, als 1 : 1-Chromkomplexe vorliegenden aminogruppenhaltigen Monoazoverbindungen mit den in Kolonne II aufgeführten, farblosen Verbindungen und anschliessende Acylierung des erhaltenen Chromkomplexes mit 1,2-Dibrompropionylchlorid. In Kolonne III sind die mit den neuen Farbstoffen auf Wolle erzielbaren Nuancen angegeben.

(Siehe Tabelle 3 Seite 32 ff.)

Tabelle 3

| Beispiel | I | II | III |
|---|---|---|---|
| 110 | 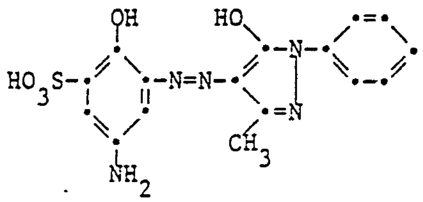 | 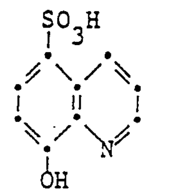 | orange-rot |
| 111 | 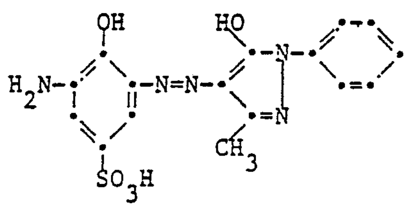 | 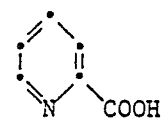 | gelbstichig rot |
| 112 | 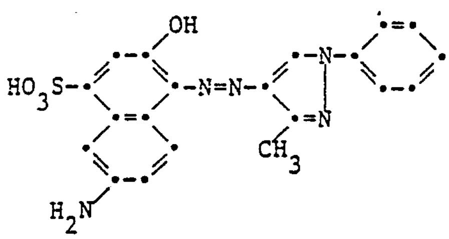 | dito | blaustichig rot |
| 113 | dito | 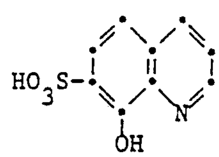 | bordeaux |
| 114 | 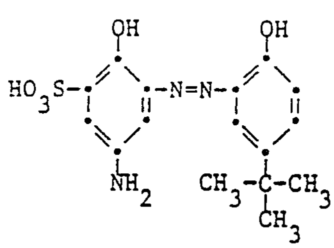 | dito | rotbraun |

Tabelle 3 (Fortsetzung)

| Beispiel | I | II | III |
|---|---|---|---|
| 115 | 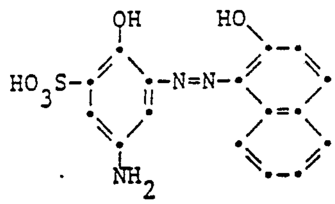 | 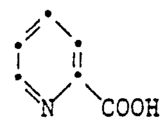 | violettgrau |
| 116 | 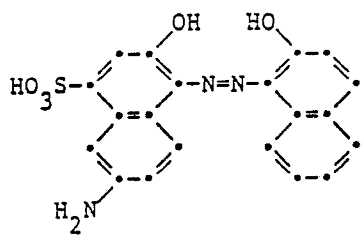 | dito | blaugrau |
| 117 | dito | 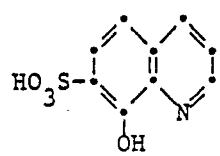 | grünstichig grau |
| 118 | 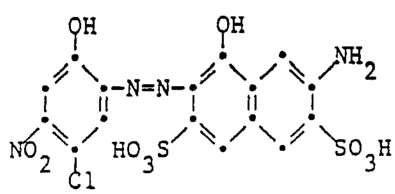 | 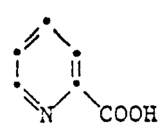 | grau |
| 119 | 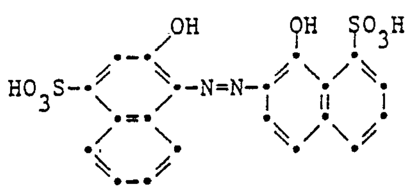 | 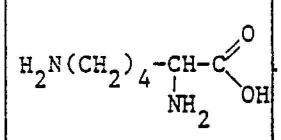 | grünstichig blau |

Tabelle 3 (Fortsetzung)

| Beispiel | I | II | III |
|---|---|---|---|
| 120 | 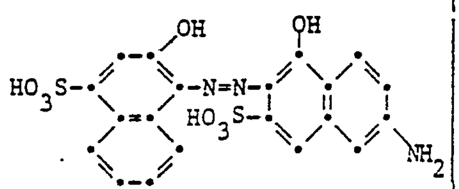 | 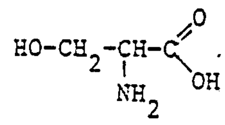 | grau |
| 121 | 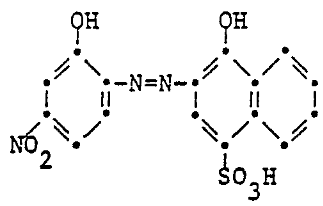 | 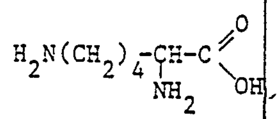 | blau |

Beispiel 122

41,9 Teile des Monoazofarbstoffs aus diazotierter 1-Hydroxy-2-amino-4-nitrobenzol-6-sulfonsäure und 1-Phenyl-3-methyl-5-pyrazolon werden in Form des 1 Atom Chrom pro Molekül Azofarbstoff enthaltenden 1 : 1-Chromkomplexes unter Rühren in 500 Teilen Wasser bei pH 7 gelöst.

Nach Zugabe von 24,0 Teilen 7-Amino-8-hydroxychinolin-5-sulfonsäure wird das Reaktionsgemisch auf 90-95 °C erwärmt und gleichzeitig durch Zutropfen von 2n-Natriumhydroxidlösung bei pH 6-7 gehalten, wobei eine klare, orangerote Lösung des einheitlichen Anlagerungsproduktes entsteht.

Nach Abkühlen auf 10-15 °C wird innerhalb 1 Stunde eine Lösung von 30 Teilen 1,2-Dibrompropionylchlorid in 30 Teilen Aceton zugetropft und durch Zutropfen von 2n-Natriumhydroxidlösung ein pH-Bereich von 6,0-6,5 eingehalten. Nach weiteren 3 Stunden Rühren bei Raumtemperatur wird der entstandene Farbstoff von folgender Konstitution

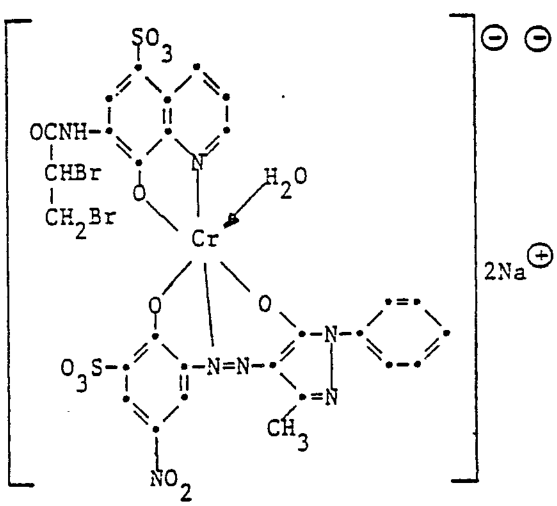

aus der erhaltenen, klaren Reaktionslösung durch Zugabe von Natriumchlorid abgeschieden, durch Filtration isoliert und im Vakuum bei 60 °C getrocknet.

Der neue, leicht wasserlösliche Farbstoff ergibt auf Wollmaterialien nach den angegebenen Verfahren volle, nass- und lichtechte, rotstichig orange Färbungen.

Werden anstelle des oben erwähnten 1 : 1-Chromkomplexes die entsprechenden Komplexe der

Monoazofarbstoffe aus diazotierter 1-Amino-2-hydroxynaphthalin-4-sulfonsäure und 1-Phenyl-3-methyl-5-pyrazolon, bzw. 2-Hydroxynaphthalin, mit 7-Amino-8-hydroxychinolin-5-sulfonsäure umgesetzt und wie oben acyliert, so resultieren konstitutionel ähnliche Farbstoffe, mit welchen Wolle in vollen, nass- und lichtechten Bordeaux-, bzw. Grünblautönen gefärbt werden kann.

Beispiel 123

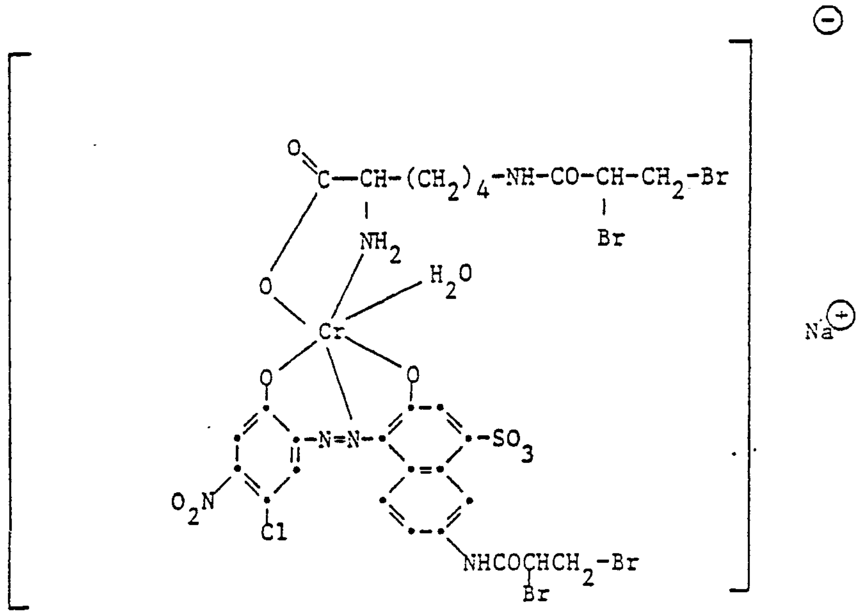

43,9 Teile des 1 : 1 Chromkomplexes des Monoazofarbstoffes, der durch alkalische Kupplung von 4-Chlor-5-nitro-2-amino-phenol auf 2-Naphthol-6-amino-4-sulfo-säure erhalten wird, werden in 400 ml Wasser suspendiert. 18,3 Teile Lysin-monohydrochlorid werden zugefügt. Unter Erwärmen auf 75-80° wird der pH mit 2n Natronlauge auf 6,5-6,7 gehalten, wobei Lösung eintritt. 1 1/2 Stunden wird bei 75-80° unter ständiger pH-Kontrolle gerührt. Nach beendeter Anlagerung wird die Temperatur auf 20-25° absinken gelassen, 68 Teile Dibrompropionylchlorid werden in 20-25 Minuten bei 20-25° zugetropft; der pH wird mit 20 %-iger Sodalösung auf 6,5-6,7 gehalten. Nach beendeter Zugabe wird 2 Stunden nachgerührt und der pH ständig kontrolliert. Die Lösung des erhaltenen bisreaktiven 1 : 2 Chromkomplexes wird klärfiltriert und dann zur Trockne eingedampft. Der Farbstoff färbt Wolle in grüngrauen Tönen mit guten Allgemeinechtheiten.

Färbebeispiel 1

Darstellung des Chromkomplexes der Formel

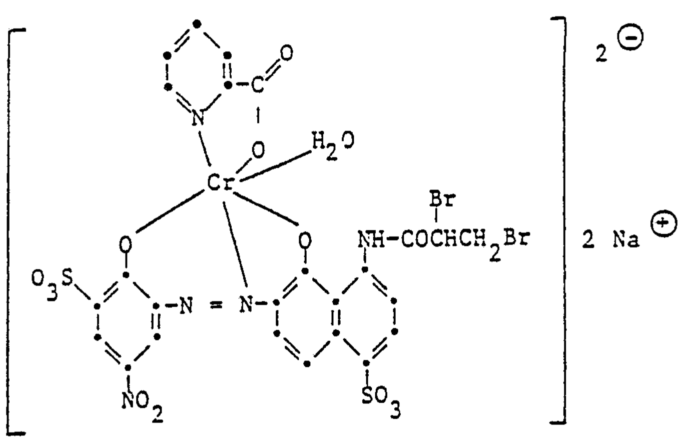

im Färbebad und gleichzeitiges Färben.

10 Teile Wollgewebe werden bei 40° in ein Färbebad eingeführt, das auf 340 Teile Wasser 0,66 Teile des 1 : 1-Chromkomplexes der Formel

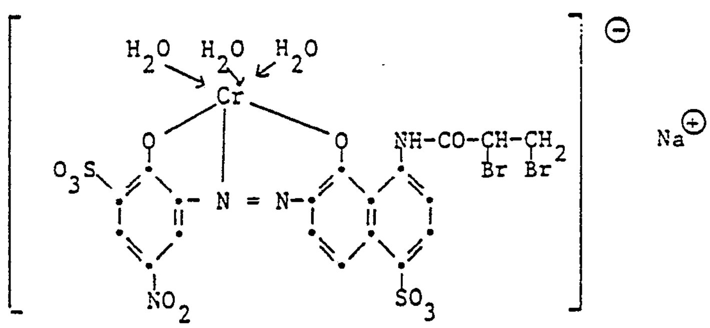

0,66 Teile Pyridin-2-carbonsäure, 0,4 Teile Ammonsulfat, 0,4 Teile Essigsäure (80 %ig) und 0,2 Teile eines Egalisierhilfsmittels enthält.

In 20 Minuten wird auf 70-75° aufgeheizt, dann wird diese Temperatur 30 Minuten lang beibehalten. In 15 Minuten wird auf 100 °C aufgeheizt, diese Temperatur wird 90 Minuten beibehalten. In 5 Minuten wird die Temperatur auf 85° absinken gelassen ; der pH wird mit 0,4 Teilen einer 25 %igen Ammoniaklösung auf ca. 8,5 gestellt. Nach 15 Minuten bei 85° wird das Wollgewebe aus der Flotte entfernt und gespült. Es liegt eine egale Marineblau-Färbung vor.

Färbebeispiel 2

In 4 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

4 Teile des gemäss Beispiel 2 erhaltenen Farbstoffes werden in 100 Teilen Wasser heiss gelöst und dem obigen Färbebad zugegeben. Dann wird mit 100 Teilen vorgenetzten Wollstrickgarns eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Ansäuern mit 1 Teil 80 %iger Ameisensäure, Zentrifugieren und Trocknen erhält man ein dunkelblau gefärbtes Wollgarn von sehr guter Nass- und Reibechtheit sowie ausgezeichneter Lichtechtheit.

Färbebeispiel 3

Ein filzfest ausgerüstetes Wollgewebe wird mit der nachfolgend beschriebenen Zubereitung getränkt und auf dem Foulard auf eine Feuchtigkeitsaufnahme von 250 % abgequetscht :

4 Teile Diaprint REG (säurebeständiges Verdickungsmittel),
1 Teil Sulfaminsäure
0,2 Teile Thymol
0,2 Teile Emulgator
94,6 Teile Wasser
_____
100 Teile

Das imprägnierte Material wird anschliessend in einer heizbaren Presse während 3 Minuten bei 100 bis 105° unter einem Druck von etwa 0,5 kg/cm² mit einem Transferpapier zusammengepresst, welches ein in üblicher Weise mit dem Farbstoff gemäss Beispiel 3 aufgebrachtes Druckmuster trägt. Nach Spülen und Trocknen des Wollgewebes weist dieses ein entsprechendes, schwarzes Druckmuster von sehr guten Echtheitseigenschaften auf.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht :

50 Teile des Farbstoffes gemäss Beispiel 6
300 Teile Harnstoff
320 Teile Solvitose OFA à 4 % (Verdickungsmittel)
10 Teile einer Mischung von anionaktivem Fettalkoholäthersulfat mit nichtionogenen Netzmitteln

10 Teile des in Färbebeispiel 2 verwendeten Egalisiermittels
10 Teile Natrium-metabisulfat
10 Teile Essigsäure 80 %ig
290 Teile Wasser
1 000 Teile Foulardierflotte.

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24 % behandelt, dass ein pH-Wert von 8,5 erreicht wird und während 15 Minuten bei 80° gehalten. Nach Spülen in warmem Wasser wird zum Schluss mit Essigsäure 80 %ig abgesäuert und getrocknet. Das Wollgewebe ist in einem vollen Schwarz von ausgezeichneten Echtheitseigenschaften gefärbt.

Färbebeispiel 5

2 Teile des gemäss Beispiel 85 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt und dann getrocknet.

Danach imprägniert man das Gewebe mit einer 20° warmen Lösung, die pro Liter 5 g Natriumhydroxid und 300 g Natriumchlorid enthält, quetscht auf 75 % Gewichtszunahme ab, dämpft die Färbung während 30 Sekunden bei 100 bis 101°, spült, seift während einer Viertelstunde in einer 0,3 %igen kochenden Lösung eines ionenfreien Waschmittels, spült und trocknet. Das Baumwollgewebe ist in einem Blauton von guten Echtheitseigenschaften gefärbt.

Färbebeispiel 6

2 Teile des gemäss Beispiel 85 erhältlichen Farbstoffes werden in 100 Teilen Wasser gelöst. Die Lösung gibt man zu 1 900 Teilen kaltem Wasser, fügt 60 Teile Natriumchlorid zu und geht mit 100 Teilen eines Baumwollgewebes in dieses Färbebad ein. Man steigert die Temperatur auf 40°, wobei nach 30 Minuten 40 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3 %igen kochenden Lösung eines ionenfreien Waschmittels, spült und trocknet.

Man erhält ein in einem neutralen Grauton gefärbtes Baumwollgewebe mit guten Echtheitseigenschaften.

Färbebeispiel 7

Ein Flanellgewebe aus chlorierter Wolle wird auf einem Foulard mit nachfolgend beschriebener Farbstoffzubereitung getränkt und auf eine Flüssigkeitsaufnahme von 100 % abgequetscht :

50 Teile des Farbstoffes gemäss Beispiel 65
300 Teile Solvitose OFA à 40 % (Verdickungsmittel)
20 Teile einer Mischung von anionaktivem Fettalkoholäthersulfat mit nichtionogenen Netzmitteln
10 Teile des in Färbebeispiel 2 verwendeten Egalisiermittels
20 Teile Essigsäure 80 %ig
600 Teile Wasser
1 000 Teile Foulardierflotte.

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24 %iger Ammoniaklösung behandelt, dass ein pH-Wert von 8,5 erreicht wird und während 15 Minuten bei 80° gehalten. Nach Spülen in warmen Wasser wird zum Schluss mit Essigsäure 80 %ig abgesäuert und getrocknet. Das Wollgewebe ist in einem vollen Schwarzton von ausgezeichneten Echtheitseigenschaften gefärbt.

Färbebeispiel 8

In 1 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 31 erhaltenen Farbstoffes werden in 100 Teilen Wasser heiss gelöst und dem obigen Färbebad zugegeben. Ein Zirkulationsfärbeapparat wird mit 100 Teilen vorgenetztem

Kammzug in Wickelform beschickt und im Verlaufe von 30 Minuten die Temperatur bei Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöhlt und das Färbegut bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein dunkelviolett gefärbtes Färbegut von sehr guter Nassechtheit sowie ausgezeichneter Lichtechtheit.

Färbebeispiel 9

In 1 000 Teilen Wasser von 50° werden nacheinander 6 Teile 80 %ige Essigsäure, 3 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 6 Teile Ammoniumsulfat gelöst.

3 Teile des gemäss Beispiel 2 erhaltenen Farbstoffes werden in 100 Teilen Wasser heiss gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97-99° erhöht, und anschliessend 90 Minuten kochend gefärbt. Der Farbstoff zieht fast vollkommen auf das Substrat auf.

Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein faseregal dunkelblau gefärbtes Substrat mit guter Nass- und Reibechtheit sowie ausgezeichneter Lichtechtheit.

Färbebeispiel 10

In 4 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,45 Teile des gemäss Beispiel 2 erhaltenen Farbstoffes und 0,30 Teile des gelben Farbstoffes der Formel

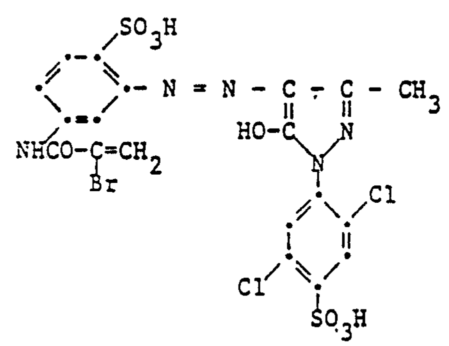

und 0,40 Teile des roten Farbstoffes der Formel

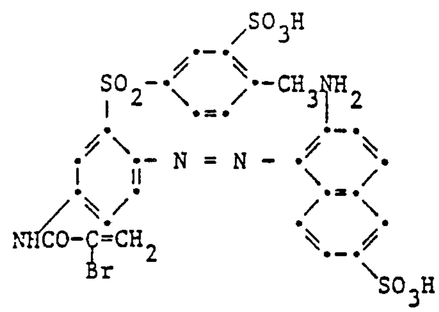

werden in 100 Teilen Wasser heiss gelöst und dem obigen Färbebad zugegeben. Dann wird mit 100 Teilen vorgenetztem Wollgewebe eingegangen und im Verlaufe von 30 Minuten die Temperatur des Bades von 50 auf 80° erhöht. Nach 20 Minuten Färben bei 80° wird zum Sieden erhitzt und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen

mit heissem und kaltem Wasser, Absäuern mit 1 Teil 80 %iger Ameisensäure. Zentrifugieren und Trocknen erhält man ein faseregales dunkelbraun gefärbtes Wollgewebe von sehr guter Nass- und Reibechtheit sowie ausgezeichneter Lichtechtheit.

Färbebeispiel 11

In 1 000 Teilen Wasser von 50° werden nacheinander 4 Teile 80 %ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

0,6 Teile des gemäss Beispiel 16 erhaltenen Farbstoffes und 0,09 Teile des gelben Farbstoffes der Formel

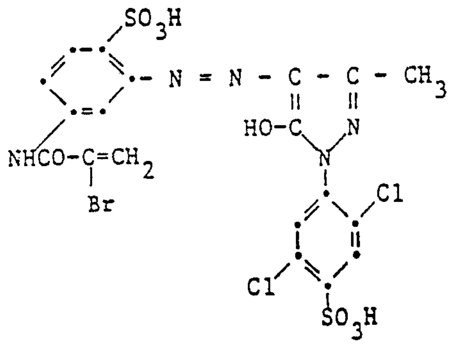

und 0,2 Teile des roten Farbstoffes der Formel

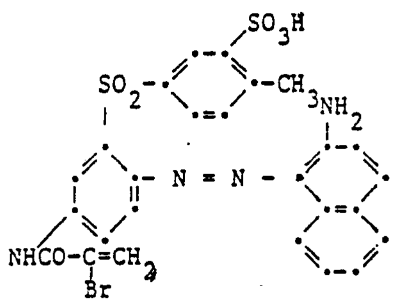

werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80 %iger Ameisensäure, Zentrifugieren und Trocknen erhält man ein grau gefärbtes Färbegut von sehr guter Nassechtheit sowie ausgezeichneter Lichtechtheit.

**Patentansprüche**

1. Chromkomplexe der Formel

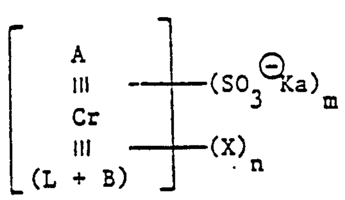

(1)

worin A der Rest eines dicyclisch metallisierbaren Azo- oder Azomethinfarbstoffes, B der Rest einer monoanionischen, zweizähnigen, komplexbildenden, organischen Verbindung, der über ein Stickstoffatom mit dem Chromatom verbunden ist, L ein farbloser monofunktioneller Ligand, X ein faserreaktiver Rest der aliphatischen Reihe, der Mono- oder Difluor-s-triazinylreihe oder der Mono-, Di- oder

Trihalogenpyrimidylreihe, Ka ein Kation, m = 1, 2 oder 3 und n = 1 oder 2 ist, wobei der Rest X und die Gruppe $SO_3^{\ominus}Ka$ an den Rest A und/oder B gebunden ist.

2. Chromkomplexe gemäss Anspruch 1, worin der Rest A der Formel

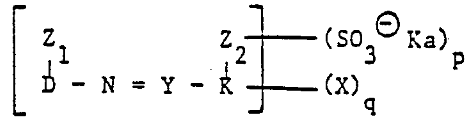

(2)

entspricht, worin D der Rest einer Diazokomponente der Benzol- oder Naphthalinreihe, Y ein Stickstoffatom oder die CH-Gruppe, K für den Fall, dass Y ein Stickstoffatom ist, der Rest einer Kupplungskomponente oder, für den Fall, dass Y die CH-Gruppe ist, der Rest eines o-Hydroxybenzaldehyds oder eines o-Hydroxynaphthaldehyds, $Z_1$ in o-Stellung zu dem Rest —N=Y— die —O— oder —COO-Gruppe und $Z_2$ die —O— oder —N(R)-Gruppe ist, wobei R Wasserstoff, gegebenenfalls substituiertes $C_{1-4}$-Alkyl oder gegebenenfalls substituiertes Phenyl bedeutet, und $Z_2$ in Nachbarstellung zu dem Rest —N=Y— an K gebunden ist, Ka und X die in Anspruch 1 angegebenen Bedeutungen haben, p = 0, 1, 2 oder 3 und q = 0, 1 oder 2 ist, wobei, falls p = 0 ist, der Rest B mindestens eine $(SO_3^{\ominus}Ka)$-Gruppe enthält, und falls q = 0 ist, der Rest B mindestens einen faserreaktiven Rest X enthält.

3. Chromkomplexe gemäss Anspruch 1, worin B der Rest einer monoanionischen, zweizähnigen, komplexbildenden, organischen Verbindung der Benzol-, Naphthalin- oder Heterocyclenreihe oder der aliphatischen Reihe ist, der 1 bis 2 Sulfonsäuregruppen und einen faserreaktiven Rest X enthalten kann, wobei X die in Anspruch 1 angegebene Bedeutung hat und wobei der Rest B über ein koordinativ gebundenes Stickstoffatom an das Chromatom gebunden ist.

4. Chromkomplexe gemäss einem der Ansprüche 1 bis 3, worin X ein faserreaktiver Rest der in Anspruch 1 angegebenen Bedeutung ist, der direkt oder über ein Brückenglied an den Azo- oder Azomethinfarbstoffrest A und/oder an den Rest B gebunden ist.

5. Chromkomplexe gemäss einem der Ansprüche 1 bis 4 der Formel

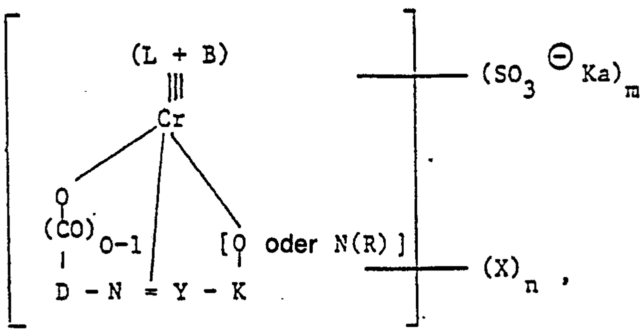

(3)

worin B der Rest einer monoanionischen, zweizähnigen, komplexbildenden, organischen Verbindung der Benzol-, Naphthalin- oder Heterocyclenreihe oder der aliphatischen Reihe ist, L ein farbloser monofunktioneller Ligand, D der Rest einer Diazokomponente der Benzol- oder Naphthalinreihe, der die

$$-(CO)_{0-1}O-$$

Gruppe in o-Stellung zur —N=Y-Gruppe enthält, Y ein Stickstoffatom oder die —CH-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Acetoacetarylid- oder Benzoylessigsäurearylidreihe ist, der den Rest —[O oder N(R)]— in Nachbarstellung zur Azobrücke enthält und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxanaphthaldehyds bedeutet, und X ein faserreaktiver Rest der in Anspruch 1 angegebenen Bedeutung ist, der direkt oder über ein Brückenglied an D und/oder K und/oder B gebunden ist, Ka ein Kation, m = 1, 2 oder 3 und n = 1 oder 2 bedeutet, wobei die Gruppe $SO_3^{\ominus}Ka$ an D und/oder K gebunden ist.

6. Chromkomplexe gemäss Anspruch 5, worin Y ein Stickstoffatom ist.

7. Chromkomplexe gemäss Anspruch 5, worin B ein Rest der 8-Hydroxy- oder 8-Carboxychinolin-, Pyridin-2-carbonsäure-, o-Hydroxyanilin- oder o-Hydroxynaphthylaminreihe, oder ein Rest der Formel

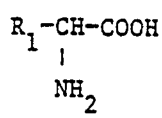

wobei $R_1$ $C_{1-6}$-Alkyl bedeutet und der Rest $R_1$ gegebenenfalls weitersubstituiert ist.

8. Chromkomplexe gemäss Anspruch 5, worin X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Sulfatoäthylsulfonylrest oder ein Rest der Mono-, Di- oder Trihalogenpyrimidyl- oder Mono- oder Difluor-s-triazinylreihe ist, wobei X gegebenenfalls über ein Brückenglied der Formel

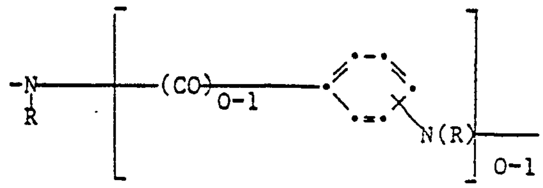

oder

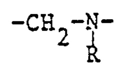

an D und/oder K und/oder B gebunden ist und R die in Anspruch 5 angegebene Bedeutung hat, und wobei die Chromkomplexe einen oder zwei Reste X enthalten.

9. Chromkomplexe gemäss einem der Ansprüche 5 bis 8 der Formel

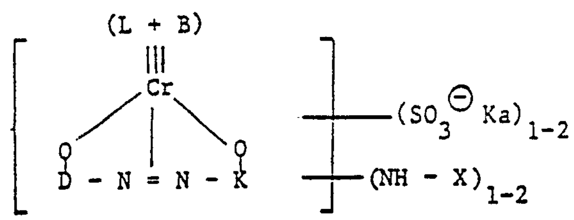 (4)

worin B den Rest von 8-Hydroxychinolin, 5-Chlor-8-hydroxychinolin, 8-Hydroxychinolin-7-sulfonsäure, 5,7-Dibrom-8-hydroxychinolin, gegebenenfalls durch einen Rest —NH—X substituierte 8-Hydroxychinolin-5-sulfonsäure, Pyridin-2-carbonsäure, Alanin, Serin, Glycin, Lysin, Asparaginsäure, Prolin, L als farbloser monofunktioneller Ligand Wasser, D ein Benzolrest, der das Sauerstoffatom in o-Stellung zur Azobrücke enthält und durch Sulfo, Nitro, Chlor und den Rest —NH—X substituiert sein kann oder ein Naphthalinrest, der das Sauerstoffatom in o-Stellung zu der Azobrücke enthält und der substituiert sein kann durch Sulfo, Nitro und den Rest —NH—X, K ein Naphthalinrest, der durch den Rest —NH—X und 1 oder 2 Sulfonsäuregruppen substituiert sein kann, wobei der Rest —NH—X direkt oder über den Phenylaminorest an den Naphthalinkern gebunden ist, ein 1-Phenyl-3-methylpyrazolon-(5)-rest, wobei die Gruppe —NH—X an den Phenylring gebunden sein kann, oder ein 1-(2′, 2″-Disulfostilben)-3-methylpyrazolon-(5)-rest, wobei die Gruppe —NH—X in 4″-Stellung gebunden ist, oder ein Phenylrest ist, der durch $C_{1-4}$-Alkyl substituiert sein kann, und X α,β-Dibrompropionyl, α-Bromacryloyl, β-Chloracryloyl, 2,6-Difluor-5-chlorpyrimidyl, 2-Fluor-4-(3′-Sulfophenylamino)-triazinyl, 2-Fluor-4-(2′-methylphenylamino)-triazinyl, 2-Fluor-4-isopropylaminotriazinyl, 2-Fluor-5-chlor-6-chlormethylpyrimidinyl oder 2-Fluor-5-chlor-6-methylpyrimidinyl ist und Ka ein Alkalikation bedeutet.

10. Chromkomplexe gemäss Anspruch 9, worin B den komplexgebundenen Rest von 8-Hydroxychinolin und Pyridin-2-carbonsäure bedeutet.

11. Chromkomplexe gemäss Anspruch 9 der Formel

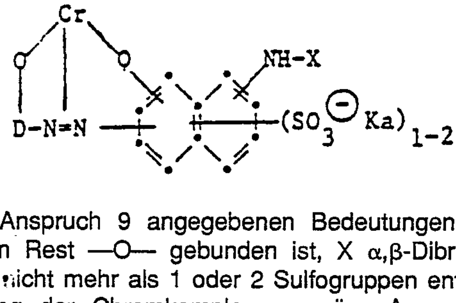 (5)

worin B, D, L und Ka die in Anspruch 9 angegebenen Bedeutungen haben, die Azogruppe an den Naphthalinkern in o-Stellung zum Rest —O— gebunden ist, X α,β-Dibrompropionyl oder α-Bromacryloyl bedeutet und der Chromkomplex nicht mehr als 1 oder 2 Sulfogruppen enthält.

12. Verfahren zur Herstellung der Chromkomplexe gemäss Anspruch 1, dadurch gekennzeichnet, dass man eine zweizähnige, komplexbildende, organische Verbindung, die den monoanionischen Rest B enthält, mit einem 1 : 1-Chromkomplex der Formel

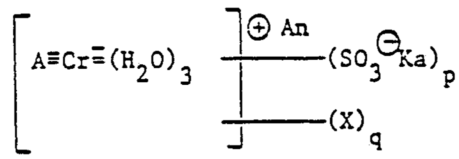

(6)

worin A und Ka die in Anspruch 1 angegebenen Bedeutungen haben, und p = 0, 1, 2 oder 3, q = 0, 1 oder 2 und An ein Anion ist, in wässrigem Medium, gegebenenfalls in Gegenwart eines von Wasser verschiedenen, farblosen, monofunktionellen Liganden L umsetzt und gegebenenfalls anschliessend den erhaltenen Chromkomplex mit einer den/die faserreaktiven Rest(e) einführenden Verbindung(en) umsetzt, wobei falls p = 0 ist, der Rest B mindestens eine Sulfogruppe enthält.

13. Verfahren gemäss Anspruch 12, dadurch gekennzeichnet, dass man die zweizähnige, komplexbildende, organische Verbindung mit dem 1 : 1-Chromkomplex der Formel (6) bei einer Temperatur von 60 bis 100 °C und einem pH von 5 bis 11 umsetzt.

14. Verfahren gemäss Anspruch 12, dadurch gekennzeichnet, dass man die Umsetzung mit einer die Reaktivgruppe(n) einführenden Verbindung bei einer Temperatur von 15 bis 30 °C und einem pH von 5 bis 8 ausführt.

15. Verfahren zum Färben textiler Materialien mit Chromkomplexen gemäss den Ansprüchen 1 bis 11, dadurch gekennzeichnet, dass man eine wässrige Flotte, welche eine den Rest B einführende Verbindung und den 1 : 1-Chromkomplex der Formel

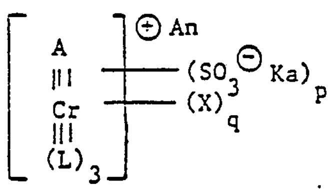

(11)

worin A, L, X und Ka die in Anspruch 1 angegebenen Bedeutungen haben, und p = 0 bis 3, q = 0 bis 2 und An ein Anion ist, das textile Material und gegebenenfalls weitere Zusätze enthält, verwendet, die Flotte gegebenenfalls stufenweise auf 100 °C erhitzt, anschliessend alkalisch stellt und die Färbung fertigstellt, und wobei, falls p = 0 ist der Rest B mindestens eine ($SO_3^{\ominus}Ka$)-Gruppe enthält, und, falls q = 0 ist, der Rest B mindestens einen faserreaktiven Rest X enthält.

16. Verfahren gemäss Anspruch 15, dadurch gekennzeichnet, dass man die den Rest B einführende Verbindung und den 1 : 1-Chromkomplex der Formel (11) im molaren Verhältnis 2 : 1 bis 1 : 1 einsetzt.

17. Verfahren gemäss Anspruch 15, dadurch gekennzeichnet, dass man die Färbeflotte, welche die in Anspruch 15 angegebenen Komponenten enthält, innerhalb von 10 bis 45 Minuten auf 60 bis 80 °C erwärmt, diese Flottentemperatur für 10 bis 45 Minuten beibehält und anschliessend innerhalb von 10 bis 30 Minuten auf 100 °C aufheizt, diese Temperatur für 30 bis 90 Minuten beibehält, auf 85 °C abkühlt, den pH der Flotte auf 8 bis 9 einstellt und während weiteren 10 bis 30 Minuten bei 85 °C nachbehandelt.

18. Verfahren gemäss Anspruch 15, dadurch gekennzeichnet, dass die Flotte als weitere Zusätze eine anorganische oder organische Säure, insbesondere Essigsäure, ein Alkali- oder Ammoniumsalz, insbesondere Ammoniumsulfat, und gegebenenfalls ein Egalisiermittel enthält.

19. Verfahren gemäss Anspruch 15, dadurch gekennzeichnet, dass man als textile Materialien synthetisches oder natürliches Polyamid verwendet.

20. Verwendung der Chromkomplexe gemäss Anspruch 1 zum Färben textiler Materialien.

21. Dass gemäss einem der Ansprüche 15 oder 20 gefärbte Textilmaterial.

**Claims**

1. A chromium complex of the formula

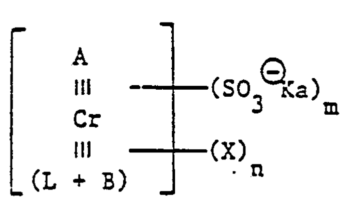

(1)

in which A is the radical of a dicyclically metallisable azo or azomethine dye, B is the radical of a monoanionic bidentate complexing organic compound which is bonded to the chromium atom via a

nitrogen atom, L is a colourless mono-functional ligand, X is a fibre-reactive radical of the aliphatic series, the mono-s-triazinyl or difluoro-s-triazinyl series or the monohalopyrimidyl, dihalopyrimidyl or trihalopyrimidyl series, Ka is a cation, m is 1, 2 or 3, n is 1 or 2, and the X radical and the $SO_3$ Ka group are each bonded to the radical A and/or B.

2. A chromium complex according to claim 1 in which the radical A has the formula

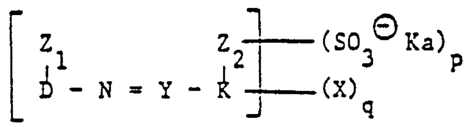

(2)

in which D is the radical of a diazo component of the benzene or naphthalene series, Y is a nitrogen atom or a CH group, K, in the event that Y is a nitrogen atom, is the radical of a coupling component, or in the event that Y is a CH group is the radical of an o-hydroxy-benzaldehyde or an o-hydroxynaphthaldehyde, $Z_1$, which is in the o-position to the —N=Y— radical, is a —O— or —COO— group, and $Z_2$ is an —O— or —N(R)-group where R is hydrogen, substituted or unsubstituted $C_{1\text{-}4}$alkyl or substituted or unsubstituted phenyl, and $Z_2$ is bonded to K in the adjacent position to the —N=Y— radical, Ka and X are as defined in claim 1, p is 0, 1, 2 or 3 and q is 0, 1 or 2, and if p is 0 the B radical contains at least one $SO_3$ Ka group and if q is 0 at least one fibre-reactive radical X.

3. A chromium complex according to claim 1 in which B is the radical of a monoanionic bidentate complexing organic compound of the benzene, naphthalene or heterocyclic series or of the aliphatic series and can contain 1 or 2 sulfonic acid groups and a fibre-reactive radical X where X is as defined in claim 1 and is bonded to the chromium atom via a coordinately bonded nitrogen atom.

4. A chromium complex according to any one of claims 1 to 3 in which X is a fibre-reactive radical as defined in claim 1 which is bonded to the azo or azomethine dye radical A and/or to the radical B either directly or via a bridge member.

5. A chromium complex according to any one of claims 1 to 4 of the formula

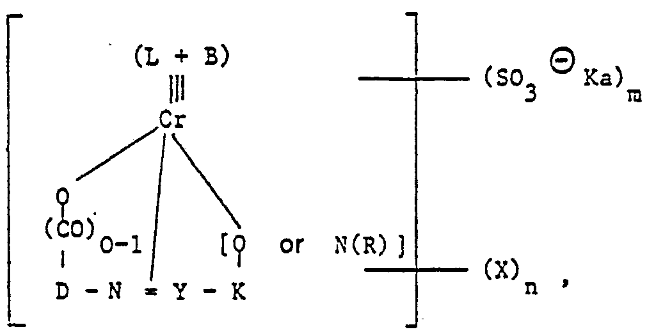

(3)

in which B is the radical of a monoanionic bidentate complexing organic compound of the benzene, naphthalene or heterocyclic series or the aliphatic series, L is a colourless monofunctional ligand, D is the radical of a diazo component of the benzene or naphthalene series which contains the

$$-(CO)_{0-1}O-$$

group in the o-position relative to the —N=Y-group, Y is a nitrogen atom or a —CH group, K, in the event that Y is a nitrogen atom, is the radical of a coupling component of the benzene of naphthalene series or of the 5-pyrazolone, 5-aminopyrazole, acetoacetarylide or benzoylacetoarylide series which contains the —[O or N(R)]— radical adjacent to the azo bridge and R is hydrogen, substituted or unsubstituted $C_{1\text{-}4}$-alkyl or substituted or unsubstituted phenyl, or in the event that Y is a CH group, K is the radical of an o-hydroxybenzaldehyde or o-hydroxynaphthaldehyde, and X is a fibre-reactive radical as defined in claim 1 which is bonded to D and/or K and/or B either directly or via a bridge member, Ka is a cation, m is 1, 2 or 3 and n is 1 or 2, and the $SO_3$ Ka group is bonded to D and/or K.

6. A chromium complex according to claim 5 in which Y is a nitrogen atom.

7. A chromium complex according to claim 5 in which B is a radical of the 8-hydroxyquinoline, 8-carboxyquinoline, pyridine-2-carboxylic acid, o-hydroxyaniline or o-hydroxy-naphthylamine series, or a radical of the formula

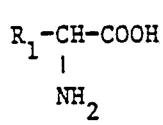

where $R_1$ is $C_1$-$_6$alkyl and can be further substituted.

8. A chromium complex according to claim 5 in which X is an acryloyl, monohaloacryloyl, dihaloacryloyl, trihaloacryloyl, monohalomethacryloyl, dihalomethacryloyl, trihalomethacryloyl, monohalopropionyl, dihalopropionyl, phenylsulfonylpropionyl, methylsulfonylpropionyl, vinylsulfonyl, -chloroethylsulfonyl or β-sulfatoethylsulfonyl radical or a radical of the monohalopyrimidyl, dihalopyrimidyl or trihalopyrimidyl or mono-s-triazinyl or difluoro-s-triazinyl series and can be bonded to D and/or K and/or B via a bridge member of the formula

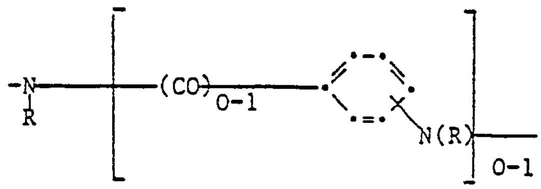

or

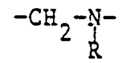

and R is as defined in claim 5 and the chromium complexes contain one or two radicals.

9. A chromium complex according to any one of claims 5 to 8 of the formula

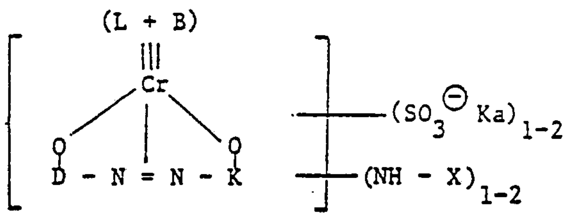

(4)

in which B is the radical of 8-hydroxyquinoline, 5-chloro-8-hydroxyquinoline, 8-hydroxyquinoline-7-sulfonic acid, 5,7-dibromo-8-hydroxyquinoline, 8-hydroxyquinoline-5-sulfonic acid which can be substituted by an —NH—X radical, pyridine-2-carboxylic acid, alanine, serine, glycine, lysine, aspartic acid or proline, the colourless monofunctional ligand L is water, D is a benzene radical which contains the oxygen atom in the o-position relative to the azo bridge and can be substituted by sulfo, nitro, chlorine or an —NH—X radical or is a naphthalene radical which contains the oxygen atom in the o-position relative to the azo bridge and can be substituted by sulfo, nitro or an —NH—X radical, K is a naphthalene radical which can be substituted by an —NH—X radical and 1 or 2 sulfonic acid groups, said —NH—X radical being bonded to the naphthalene nucleus either directly or via the phenylamino radical, a 1-phenyl-3-methylpyrazol-5-one radical in which the —NH—X group can be bonded to the phenyl ring, or a 1-(2′,2″-disulfostilbene)-3-methylpyrazol-5-one radical in which the —NH—X group is bonded in the 4″-position, or is a phenyl radical which can be substituted by $C_{1\text{-}4}$alkyl, X is , -dibromopropionyl, -bromoacryloyl, -chloroacryloyl, 2,6-difluoro-5-chloropyrimidyl, 2-fluoro-4-(3′-sulfophenylamino)-triazinyl, 2-fluoro-4-(2′-methylphenylamino)-triazinyl, 2-fluoro-4-isopropylaminotriazinyl, 2-fluoro-5-chloro-6-chloromethylpyrimidinyl or 2-fluoro-5-chloro-6-methylpyrimidinyl, and Ka is an alkali metal cation.

10. A chromium complex according to claim 9 in which B is the complexed radical of 8-hydroxyquinoline or pyridine-2-carboxylic acid.

11. A chromium complex according to claim 9 of the formula

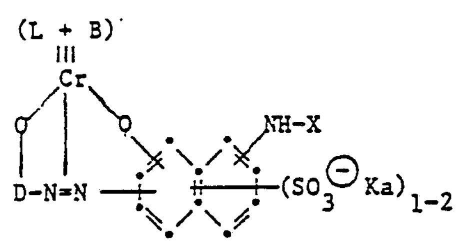

(5)

in which B, D, L and Ka are as defined in claim 9, the azo group is bonded to the naphthalene nucleus in the o-position relative to the —O— radical, X is , -dibromopropionyl or -bromoacryloyl, and the chromium complex contains no more than 1 or 2 sulfo groups.

12. A process for preparing the chromium complex according to claim 1, which comprises reacting a bidentate complexing organic compound which contains the monoanionic radical B with a 1 : 1 chromium complex of the formula

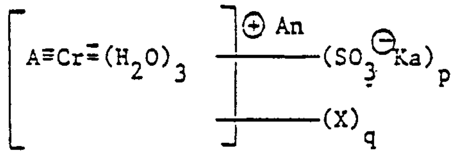

(6)

in which A and Ka are as defined in claim 1, p is 0, 1, 2 or 3, q is 0, 1 or 2 and An is an anion, in an aqueous medium in the absence or presence of a colourless monofunctional ligand L other than water, and if desired subsequently reacting the resulting chromium complex with a compound or compounds which introduces or introduce the fibre-reactive radical(s), wherein if p is 0, the radical B contains at least one sulfo group.

13. A process according to claim 12, wherein the bidentate complexing organic compound is reacted with the 1 : 1 chromium complex of the formula (6) at a temperature of 60 to 100° and at pH 5-11.

14. A process according to claim 12, wherein the reaction with a compound which introduces the reactive group(s) is carried out at a temperature of 15 to 30 °C and at pH 5-8.

15. A process for dyeing textile materials with a chromium complex according to claims 1 to 11, which comprises using an aqueous liquor which contains a compound introducing the radical B, the 1 : 1 chromium complex of the formula

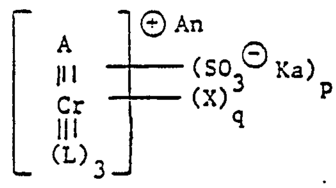

(11)

in which A, L, X and Ka are as defined in claim 1, p is 0 to 3, q is 0 to 2 and An is an anion, and the textile material and can, if desired, also contain further additives, heating the liquor to 100 °C in continuous or stepwise fashion and then bringing it to an alkaline pH, and completing the dyeing, and wherein if p is 0 the radical B contains at least one $SO_3$ Ka group and if q is 0 at least one fibre-reactive radical X.

16. A process according to claim 15, wherein the compound introducing the radical B and the 1 : 1 chromium complex of the formula (11) are deployed in a molar ratio of 2 : 1 to 1 : 1.

17. A process according to claim 15, wherein the dyeing liquor which contains the components indicated in claim 15 is raised to 60 to 80 °C in the course of 10 to 45 minutes, is held at said temperature for 10 to 45 minutes, is then raised to 100 °C in the course of 10 to 30 minutes, is maintained at said temperature for 30 to 90 minutes, is cooled down to 85 °C, is brought to pH 8-9 and is used to aftertreat the dyeing at 85 °C for a further 10 to 30 minutes.

18. A process according to claim 15, wherein the liquor contains as further additives an inorganic or organic acid, in particular acetic acid, and an alkali metal or ammonium salt, in particular ammonium sulfate and can, if desired, also contain a levelling agent.

19. A process according to claim 15, wherein the textile materials used are made of synthetic or natural polyamide.

20. Use of the chromium complex according to claim 1 for dyeing textile materials.

21. Textile material dyed according to either of claims 15 or 20.

**Revendications**

1. Complexes de chrome de formule

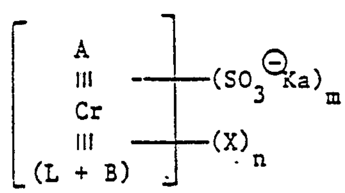

(1)

dans laquelle A est le reste d'un colorant azoïque ou azométhine bicyclique métallable ; B est le reste d'un composé organique monoanionique bidenté, complexant, qui est lié à l'atome de chrome par un atome d'azote ; L est un ligand monofonctionnel incolore ; X est un radical réactif avec les fibres, de la série aliphatique, de la série mono- ou difluoro-s-triazinyle ou de la série mono-, di- ou trihalogénopyrimidyle ; Ka est un cation ; m vaut 1, 2 ou 3 ; et n vaut 1 ou 2 ; le radical X et le groupe $SO_3^{\ominus}$Ka étant liés au reste A et/ou au reste B.

2. Complexes de chrome selon la revendication 1, dans lesquels le reste A correspond à la formule

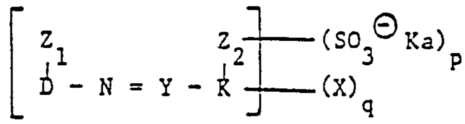 (2)

dans laquelle D est le reste d'un composant diazo de la série du benzène ou du naphtalène ; Y est un atome d'azote ou le groupe CH ; K, dans le cas où Y est un atome d'azote, est le reste d'un composant de copulation, ou, dans le cas où Y est le groupe CH, est le reste d'un o-hydroxybenzaldéhyde ou d'un o-hydroxynaphtaldéhyde ; $Z_1$ est —O— ou le groupe —COO— en position ortho par rapport au radical —N=Y— ; et $Z_2$ est —O— ou le groupe —N(R)—, R représentant un atome d'hydrogène ou un groupe alkyle en $C_{1-4}$ éventuellement substitué ou un groupe phényle éventuellement substitué ; et $Z_2$ est lié à K en position voisine par rapport au radical —N=Y— ; Ka et X ont les significations données dans la revendication 1 ; p vaut 0, 1, 2 ou 3 ; et q vaut 0, 1 ou 2 ; dans le cas où p vaut 0, le reste B contenant au moins un groupe $SO_3^{\ominus}$Ka, et dans le cas où q vaut 0, le reste B contenant au moins un radical X réactif avec les fibres.

3. Complexes de chrome selon la revendication 1, dans lesquels B est le reste d'un composé organique monoanionique bidenté, complexant, de la série du benzène ou du naphtalène ou de la série hétérocyclique ou de la série aliphatique, qui peut contenir 1 ou 2 groupes sulfo et un radical X réactif avec les fibres, X ayant la signification donnée dans la revendication 1 et le reste B étant lié à l'atome de chrome par un atome d'azote lié par coordination.

4. Complexes de chrome selon l'une des revendications 1 à 3, dans lesquels X est un radical réactif avec les fibres, ayant la signification donnée dans la revendication 1, qui est lié directement ou par un chaînon pontant au reste azo ou azométhine A et/ou au reste B.

5. Complexes de chrome selon l'une des revendications 1 à 4, de formule

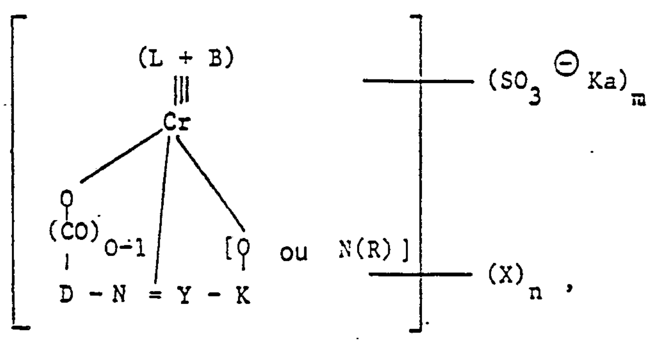 (3)

dans laquelle B est le reste d'un composé organique monoanionique bidenté, complexant, de la série du benzène ou du naphtalène ou de la série hétérocyclique ou de la série aliphatique ; L est un ligand monofonctionnel incolore ; D est le reste d'un composant diazo de la série du benzène ou du naphtalène qui contient le groupe

$$-(CO)_{0-1}O-$$

en position ortho par rapport au groupe —N=Y— ; Y est un atome d'azote ou le groupe —CH— ; K, dans le cas où Y est un atome d'azote, est le reste d'un composant de copulation de la série du benzène ou du naphtalène ou de la série de la 5-pyrazolone, du 5-aminopyrazole, des acétoacétarylides ou des benzoylacétarylides, qui contient le radical —[O ou N(R)]— en position voisine par rapport au pont azo, et R étant un atome d'hydrogène ou un groupe alkyle en $C_1$-$C_4$ éventuellement substitué ou un groupe phényle éventuellement substitué, ou, dans le cas où Y est le groupe CH, K est le reste d'un o-hydroxybenzaldéhyde ou o-hydroxynaphtaldéhyde ; et X est un radical réactif avec les fibres, ayant la signification donnée dans la revendication 1, qui est lié directement ou par un chaînon pontant à D et/ou K et/ou B ; Ka représente un cation ; m vaut 1, 2 ou 3, et n vaut 1 ou 2, le groupe $SO_3^{\ominus}$Ka étant lié à D et/ou à K.

6. Complexes de chrome selon la revendication 5, dans lesquels Y est un atome d'azote.

7. Complexes de chrome selon la revendication 5, dans lesquels B est un reste de la série de la 8-hydroxy- ou 8-carboxyquinoléine, de l'acide pyridine-2-carboxylique, de la o-hydroxyaniline ou de la o-hydroxynaphtylamine, ou un reste de formule

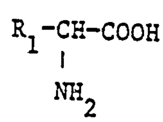

dans laquelle $R_1$ représente un groupe alkyle en $C_{1-6}$ et le radical $R_1$ est éventuellement substitué davantage.

8. Complexes de chrome selon la revendication 5, dans lesquels X est un radical acryloyle, mono-, di- ou trihalogénoacryloyle ou -méthacryloyle, mono- ou dihalogénopropionyle, phénylsulfonylpropionyle, méthylsulfonylpropionyle, vinylsulfonyle, β-chloréthylsulfonyle, β-sulfatoéthylsulfonyle, ou un radical de la série mono-, di- ou trihalogénopyrimidyle ou mono- ou difluoro-s-triazinyle, X étant éventuellement lié à D et/ou K et/ou B par un chaînon pontant de formule

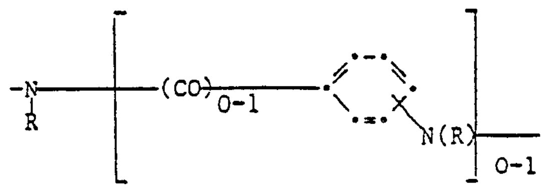

ou

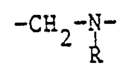

et R ayant la signification donnée dans la revendication 5, et les complexes de chrome contenant un ou deux radicaux X.

9. Complexes de chrome selon l'une des revendications 5 à 8, de formule

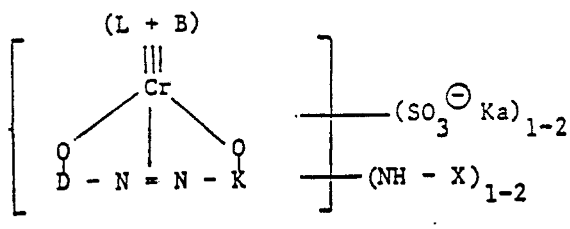

(4)

dans laquelle B est le reste de la 8-hydroxyquinoléine, de la 5-chloro-8-hydroxyquinoléine, de l'acide 8-hydroxyquinoléine-7-sulfonique, de la 5,7-dibromo-8-hydroxyquinoléine, de l'acide 8-hydroxyquinoléine-5-sulfonique éventuellement substitué par un radical —NH—X, de l'acide pyridine-2-carboxylique, de l'alanine, de la sérine, de la glycine, de la lysine, de l'acide aspartique, de la proline ; L en tant que ligand monofonctionnel incolore est l'eau ; D est un radical benzénique qui comporte l'atome d'oxygène en position ortho par rapport au pont azo et qui peut être substitué par un atome de chlore ou par un groupe sulfo, nitro et par le reste —NH—X, ou un radical naphtalène qui comporte l'atome d'oxygène en position ortho par rapport au pont azo et qui peut être substitué par un groupe sulfo ou nitro et par le radical —NH—X ; K est un reste naphtalène qui peut être substitué par le radical —NH—X et par 1 ou 2 groupes sulfo, le radical —NH—X étant lié directement ou par le radical phénylamino au noyau naphtalène, un radical 1-phényl-3-méthylpyrazolone-(5), le groupe —NH—X pouvant être lié au noyau phényle, ou un radical 1-(2',2''-disulfostilbène)-3-méthylpyrazolone-(5), le groupe —NH—X étant lié en position 4'', ou un radical phényle qui peut être substitué par un groupe alkyle en $C_{1-4}$ ; et X est le radical α,β-dibromopropionyle, α-bromoacryloyle, β-chloroacryloyle, 2,6-difluoro-5-chloropyrimidyle, 2-fluoro-4-(3'-sulfophénylamino)-triazinyle, 2-fluoro-4-(2'-méthylphénylamino)triazinyle, 2-fluoro-4-isopropylaminotriazinyle, 2-fluoro-5-chloro-6-chlorométhylpyrimidinyle ou 2-fluoro-5-chloro-6-méthylpyrimidinyle ; et Ka représente un cation alcalin.

10. Complexes de chrome selon la revendication 9, dans lesquels B représente le reste de la 8-hydroxyquinoléine ou de l'acide pyridine-2-carboxylique, lié en complexe.

11. Complexes de chrome selon la revendication 9, de formule

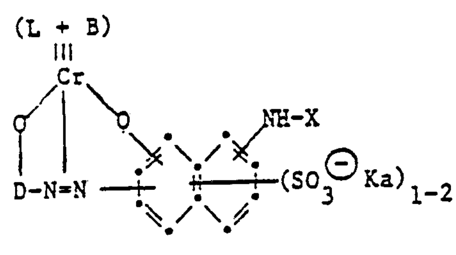

(5)

dans laquelle B, D, L et Ka ont les significations données dans la revendication 9 ; le groupe azo est lié au noyau naphtalène en position ortho par rapport à —O— ; X représente le radical α,β-dibromopropionyle ou α-bromoacryloyle, et le complexe de chrome ne contient pas plus de 1 ou 2 groupes sulfo.

12. Procédé pour la préparation des complexes de chrome selon la revendication 1, caractérisé en ce que l'on fait réagir un composé organique complexant, bidenté, qui contient le reste monoanionique B, avec un complexe de chrome 1 : 1 de formule

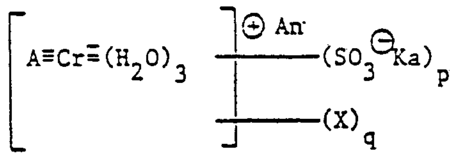

(6)

dans laquelle A et Ka ont les significations données dans la revendication 1 et p vaut 0, 1, 2 ou 3, q vaut 0, 1 ou 2, et An est un anion, en milieu aqueux, éventuellement en présence d'un ligand L monofonctionnel incolore différent de l'eau, et éventuellement on fait réagir ensuite le complexe de chrome obtenu, avec un ou des composés introduisant le(s) reste(s) X réactif(s) avec les fibres, le reste B, lorsque p vaut 0, contenant au moins un groupe sulfo.

13. Procédé selon la revendication 12, caractérisé en ce que l'on fait réagir le composé organique complexant, bidenté, avec le complexe de chrome 1 : 1 de formule (6), à une température de 60 à 100 °C et à un pH de 5 à 11.

14. Procédé selon la revendication 12, caractérisé en ce que l'on effectue la réaction avec un composé introduisant le(s) groupe(s) réactif(s), à une température de 15 à 30 °C et à un pH de 5 à 8.

15. Procédé pour la teinture de matériaux textiles avec des complexes de chrome selon les revendications 1 à 11, caractérisé en ce que l'on utilise un bain aqueux qui contient le complexe de chrome 1 : 1 de formule

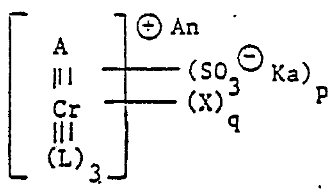

(11)

dans laquelle A, L, X et Ka ont les significations données dans la revendication 1 et p vaut de 0 à 3, q vaut de 0 à 2, et An est un anion, et un composé introduisant le reste B, le matériau textile et éventuellement d'autres additifs, on porte, éventuellement par paliers, le bain à 100 °C, puis on l'alcalinise, et on termine la teinture, et le reste B contenant, dans le cas où p vaut 0, au moins un groupe $SO_3^{\ominus}$Ka, et, dans le cas où q vaut 0, au moins un radical X réactif avec les fibres.

16. Procédé selon la revendication 15, caractérisé en ce que l'on utilise le composé introduisant le reste B et le complexe de chrome 1 : 1 de formule (11) en un rapport molaire allant de 2 : 1 à 1 : 1.

17. Procédé selon la revendication 15, caractérisé en ce que l'on porte à 60-80 °C, en l'espace de 10 à 45 minutes, le bain de teinture qui contient les composés indiqués dans la revendication 15, on maintient cette température de bain pendant 10 à 45 minutes, et on la porte ensuite à 100 °C en l'espace de 10 à 30 minutes, on maintient cette température pendant 30 à 90 minutes, on refroidit à 85 °C, on ajuste le pH du bain à 8-9 et on poursuit le traitement pendant encore 10 à 30 minutes à 85 °C.

18. Procédé selon la revendication 15, caractérisé en ce que le bain contient comme autres additifs un acide organique ou minéral, en particulier de l'acide acétique, un sel alcalin ou d'ammonium, en particulier du sulfate d'ammonium, et éventuellement un agent d'unisson.

19. Procédé selon la revendication 15, caractérisé par le fait qu'en tant que matériaux textiles, on utilise un polyamide synthétique ou naturel.

20. Utilisation des complexes de chrome selon la revendication 1, pour la teinture de matériaux textiles.

21. Le matériau textile teint selon l'une des revendications 15 ou 20.